# EUROPÄISCHE PATENTANMELDUNG

(11) **EP 4 626 006 A1**
(43) Veröffentlichungstag der Anmeldung: **01.10.2025**
(21) Anmeldenummer: 25163264.2
(22) Anmeldetag: 12.03.2025
(51) Int. Cl.: H04N 23/00

(54) **AUTOMATISCHE ÜBERPRÜFUNG UND RE-JUSTIERUNG EINER STATISCHEN BILDAUFNAHMEEINHEIT**

(30) Priorität: 28.03.2024 DE 102024202949
(71) Anmelder: Siemens Mobility GmbH, 81739 München (DE)
(72) Erfinder: Berger, Gisbert, 12487 Berlin (DE); Hoppe, Christof, 48147 Münster (DE)
(74) Vertreter: Siemens Patent Attorneys

(57) **Zusammenfassung**

Es wird ein Verfahren zur automatischen Überprüfung und zur Re-Justierung einer statischen Bildaufnahmeeinheit (SBA) beschrieben. Bei dem Verfahren werden Bilddaten (BD) von einem Bildaufnahmebereich (BAB) mit der statischen Bildaufnahmeeinheit (SBA) erfasst. Es werden Markierungen (M) in den erneut erfassten Bilddaten (BD) lokalisiert. Weiterhin werden die Positionen (P_{M}) der Markierungen (M) der erfassten Bilddaten (BD) mit Positionen (P_{R}) von Referenzmarkierungen (RM) von Referenzbilddaten (RBD), welche von dem Bildaufnahmebereich (BAB) mit vorbestimmten Bildaufnahmeparametern (VBAP) erfasst wurden, verglichen. Schließlich werden die aktuellen Bildaufnahmeparameter (ABBP) auf Basis des Vergleichs angepasst. Es wird auch ein Verfahren zum Generieren von Referenzbilddaten (RBD) zur automatischen Überprüfung und zur Re-Justierung einer statischen Bildaufnahmeeinheit (SBA) beschrieben. Weiterhin wird eine Re-Justageeinrichtung (30) beschrieben. Außerdem wird eine Anordnung (40) zur Generierung von Referenzbilddaten beschrieben. Darüber hinaus wird ein Fahrzeug (120) beschrieben.

## Beschreibung

Die Erfindung betrifft ein Verfahren zur automatischen Überprüfung und zur Re-Justierung einer statischen Bildaufnahmeeinheit. Außerdem betrifft die Erfindung ein Verfahren zum Generieren von Referenzbilddaten zur automatischen Überprüfung und zur Re-Justierung einer statischen Bildaufnahmeeinheit. Überdies betrifft die Erfindung eine Re-Justageeinrichtung. Die Erfindung bezieht sich auch auf eine Anordnung zur Generierung von Referenzbilddaten. Weiterhin betrifft die Erfindung ein Fahrzeug.

Im Rahmen der Digitalisierung werden für die Erfassung der Umgebung und von Objekten in vielen Fällen Kamerasysteme eingesetzt. Dabei kommt es darauf an, dass die Justierung der Kameras langzeitstabil und reproduzierbar ist, da sich die mechanische Ausrichtung der Kameras direkt auf den Sichtbereich (Field of View), auch als Bildaufnahmebereich bezeichnet, auswirkt. Eine wichtige Variante von Kameras sind statische Kameras, deren Bildaufnahmeparameter möglichst unverändert bleiben sollten, damit immer derselbe Bildbereich erfasst wird und bildlich wiedergegeben wird.

Oft sind die Kameras oder der die Kameras aufnehmende mechanische Aufbau dabei mechanischen Angriffen und Belastungen ausgesetzt, die zu Verschiebungen und Verdrehungen der Perspektive führen, welche die Nutzbarkeit der Kamerabilder beeinträchtigen können. Ferner müssen auf Grund der begrenzten Lebensdauer oder bei Beschädigungen die Kameras getauscht werden und dabei ist es wünschenswert, neben der Übernahme der übrigen Einstellungen der Kamera, die ursprüngliche Lage des Sichtfeldes (im Englischen Field of View, oft abgekürzt durch FoV) dabei zu erhalten. Besonders kritisch ist die Stabilität des Sichtfeldes bei den in jüngster Zeit zunehmend eingesetzten, auf maschinellem Lernen basierenden Systemen, da diese bei einem nicht mehr reproduzierbaren Sichtbereich u.U. neu belehrt werden müssen und diese Belehrungen (Training) besonders aufwändig sein können.

Kommt es im laufenden Betrieb eines solchen Systems zu einer Dejustierung, so wird diese oft nicht sofort bemerkt und wenn, dann meistens erst, wenn der eigentliche Einsatzzweck gefährdet oder es nicht mehr möglich ist, den Einsatzzweck zu erreichen. So kann sich z.B. bei Systemen zur automatischen Erkennung von Objekten oder Zuständen die Erkennungsleistung schleichend verschlechtern und dies wird erst bei erheblichen Einschränkungen oder dem Totalausfall bemerkt. Bei Systemen, die der Aufzeichnung dienen, wie z.B. einem CCTV-System ("CCTV" steht für "Closed Circuit Television", d.h. "Videoübewachung"), die nur selten und meist in einem Problemfall herangezogen werden, wird der fehlerhafte Sichtbereich u.U. gar nicht bemerkt und führt im Einsatzfall dazu, dass der aufgezeichnete Stream nutzlos geworden ist, da er den gewünschten Sichtbereich nicht mehr zeigt.

Ferner ist es wünschenswert, gleichartige Systeme mit einer möglichst genauen identischen Konfiguration, welche einen möglichst genau reproduzierbaren Sichtbereich miteinschließt, mehrfach und an unterschiedlichen Stellen im Gesamtsystem oder an unterschiedlichen Standorten aufzubauen, um insbesondere für automatische Erkennungssysteme die Übertragbarkeit der Konfiguration zu ermöglichen. Dies ist wieder insbesondere von Vorteil für Systeme, die auf maschinellem Lernen basieren.

Bisher wurden Kameras vorwiegend mittels mechanischer Maßnahmen justiert. Dabei wurde versucht, über entsprechend widerstandsfähige Befestigungen die Stabilität zu erreichen und über mechanische Markierungen oder Formschlüsse die Reproduzierbarkeit zu gewährleisten. Ferner wurde optisch anhand von Livebildern, einem Livestream oder durch Vergleich mit aufgezeichneten Videos oder Bildern versucht, den ursprünglichen Sichtbereich wiederherzustellen. Ferner gibt es auch Lösungen, markante, langzeitstabile Objekte, Objektkanten oder Markierungen im Bild zur Ausrichtung des Sichtbereiches zu verwenden. Dabei wurden auch bereits maschinenlesbare Markierungen, auch als Marker bezeichnet, verwendet.

Bei einer Justierung einer Kamera können sowohl die Pose der Kamera, welche durch extrinsische Parameter gekennzeichnet ist, als auch Projektionsparameter der Kamera, auch als intrinsische Parameter bezeichnet, zur Justierung verwendet werden. Beide Arten von Parametern sollen im Folgenden als Bildaufnahmeparameter oder als Kameraparameter bezeichnet werden.

Es besteht also die Aufgabe, einen unveränderten Sichtbereich einer statischen Bildaufnahmeeinheit sicherzustellen.

Diese Aufgabe wird durch ein Verfahren zur automatischen Überprüfung und Re-Justierung einer statischen Bildaufnahmeeinheit gemäß Patentanspruch 1, ein Verfahren zum Generieren von Referenzbilddaten zur automatischen Überprüfung und zur Re-Justierung einer statischen Bildaufnahmeeinheit gemäß Patentanspruch 10, eine Re-Justageeinrichtung gemäß Patentanspruch 11, eine Anordnung zur Generierung von Referenzbilddaten gemäß Patentanspruch 12 und ein Fahrzeug gemäß Patentanspruch 13 gelöst.

Bei dem erfindungsgemäßen Verfahren zur automatischen Überprüfung und zur Re-Justierung einer statischen Bildaufnahmeeinheit werden Bilddaten von einem Bildaufnahmebereich mit der statischen Bildaufnahmeeinheit mit aktuellen Bildaufnahmeparametern der statischen Bildaufnahmeeinheit erfasst. Als Bildaufnahmeeinheit soll eine Sensoreinheit verstanden werden, mit der ein Bildaufnahmebereich sensoriell erfasst und bildlich wiedergegeben wird. Bevorzugte Typen von Bildaufnahmeeinheiten sind Kameras, insbesondere optische Kameras oder Infrarotkameras oder UV-Licht-Kameras. Es sind aber auch Bildaufnahmen mit elektromagnetischen Wellen aus anderen Bereichen des Spektrums elektromagnetischer Wellen mit einbezogen. Ebenfalls sollen von dem Begriff "Bildaufnahmeeinheit" sowohl Systeme mit passiven Sensoren als auch aktiven Sensoren umfasst sein. Passive Sensoren empfangen lediglich von dem Bildaufnahmebereich emittierte Informationen, in der Regel Wellen, insbesondere elektromagnetische Wellen. Aktive Sensoren tasten den Bildaufnahmebereich aktiv ab und emittieren selbst Wellen, insbesondere elektromagnetische Wellen, in Richtung des Bildaufnahmebereichs. Bilddaten umfassen bildlich dargestellte Informationen bezüglich des Bildaufnahmebereichs, vorzugsweise optische Bildinformationen. Als Bildaufnahmeparameter sollen die vorstehend bereits erwähnten extrinsischen und intrinsischen Parameter von Bildaufnahmeeinheiten verstanden werden, mit denen diese dazu justiert werden, einen bestimmten Bildausschnitt bzw. Bildbereich zu erfassen.

In den erneut erfassten Bilddaten werden Markierungen, auch als Marker bezeichnet, lokalisiert bzw. allgemeiner werden deren Posendaten ermittelt. Die Markierungen sind lokalisierbare Bildteilbereiche, die identifizierbar und segmentierbar ausgebildet sind. Neben Positionsdaten umfassen solche Posendaten vorzugsweise auch Informationen über Orientierungen der Markierungen.

Für die automatische Überprüfung werden vom Kamerasystem zeit- oder eventgesteuert Kamerabilder aufgenommen.

Die Posendaten der Markierungen in den erfassten Bilddaten werden nun mit Posendaten von ihnen zugeordneten Referenzmarkierungen von Referenzbilddaten, welche von dem Bildaufnahmebereich mit vorbestimmten Bildaufnahmeparametern der statischen Bildaufnahmeeinheit erfasst wurden, verglichen. Die Referenzmarkierungen geben die korrekten Posendaten, insbesondere Positionen, der ihnen jeweils zugeordneten Markierungen wieder, an bzw. mit denen die Markierungen auch in den erfassten Bilddaten positioniert sein sollten, wenn die Bildaufnahmeparameter korrekt justiert sind.

Schließlich erfolgt eine Anpassung der aktuellen Bildaufnahmeparameter auf Basis des Vergleichs. D.h., die Werte der Bildaufnahmeparameter werden derart geändert, dass die in den aufgenommenen Bilddaten abgebildeten Markierungen und die Referenzmarkierungen hinsichtlich ihrer Pose möglichst übereinstimmen, vorzugsweise vollständig übereinstimmen.

Dabei erfolgt vorzugsweise das Anpassen der aktuellen Bildaufnahmeparameter auf Basis des Vergleichs mit einer iterativen Vorgehensweise mit einem erneuten Erfassen von Bilddaten von dem Bildaufnahmebereich mit der statischen Bildaufnahmeeinheit mit den angepassten aktuellen Bildaufnahmeparametern und gegebenenfalls einer weiteren Anpassung der aktuellen Bildaufnahmeparameter, bis die Markierungen in den erneut erfassten Bilddaten mit den Markierungen in den Referenzbilddaten bezüglich ihrer Posendaten vollständig übereinstimmen.

Für den Anwendungsfall einer manuellen Re-Justierung werden die erfassten Bilddaten mit Augmentierung der Positionen der Referenzmarkierungen (d.h. den Sollpositionen), überlagert. Die Referenzmarkierungen werden bevorzugt als Augmentierungen den erfassten Bilddaten überlagert, so dass Abweichungen zwischen den Positionen oder Orientierungen der Referenzmarkierungen und den Positionen oder Orientierungen der Markierungen sofort erkennbar sind. Derartige Augmentierungen können im einfachsten Fall einen Rahmen umfassen, der mit einer Markierung der erfassten Bilddaten zur Deckung gebracht werden muss, um die Bildaufnahmeeinheit zu rejustieren.

Um eine solche korrekte Justierung zu erreichen, wird die Kamera mechanisch so ausgerichtet und werden die Werte der aktuellen Bildaufnahmeparameter so lange angepasst bzw. geändert, bis die Markierungen in den erneut erfassten Bilddaten mit den ihnen zugeordneten Referenzmarkierungen in den Referenzbilddaten bezüglich ihrer Posendaten, vorzugsweise ihrer Positionen vollständig übereinstimmen. Eine vorteilhafte Ausgestaltung mit motorgesteuerten Kameras, ermöglicht in einem bestimmten Rahmen auch die automatische Korrektur des Sichtfeldes ohne manuellen Eingriff. Unter "vollständig übereinstimmen" soll in diesem Zusammenhang verstanden werden, dass alle Markierungen und nicht nur ein Teil der Markierungen mit entsprechenden Referenzmarkierungen bezüglich ihrer Posen konform werden.

Das erfindungsgemäße Verfahren zur automatischen Überprüfung und zur Re-Justierung einer statischen Bildaufnahmeeinheit ermöglicht eine automatisierte Erfassung, Kontrolle, Wiederherstellung und Übertragung der einmal vorgenommenen Einstellungen der Bildaufnahmeeinheit bzw. der Bildaufnahmeparameter. Erfolgt die Re-Justierung automatisch, so verhindert sie unbemerkte Veränderungen im Sichtfeld von Bildaufnahmeeinheiten und damit einhergehende Leistungsverschlechterungen oder Ausfälle. Ferner ermöglicht das Verfahren eine effiziente Unterstützung bei der Wiederherstellung, Reproduktion (z.B. beim Auswechseln einer Bildaufnahmeeinheit) oder Übertragung der Sichtbereiche von Bildaufnahmeeinheiten. Ein Vorteil des erfindungsgemäßen Verfahrens besteht in der Möglichkeit, für bestimmte Bildaufnahmeeinheiten zusätzlich zur automatischen Kontrolle auch die Korrektur der Sichtfelder weitestgehend bzw. vollständig automatisieren zu können. Durch die effiziente Wiederherstellung und Übertragbarkeit der Sichtbereiche von Bildaufnahmeeinheiten kann der Aufwand insbesondere für die Konfiguration oder das Training von automatischen Erkennungssystem stark verringert werden.

Bei dem erfindungsgemäßen Verfahren zum Generieren von Referenzbilddaten zur automatischen Überprüfung und zur Re-Justierung einer statischen Bildaufnahmeeinheit werden Markierungen bzw. Referenzmarkierungen in einem Bildaufnahmebereich der statischen Bildaufnahmeeinheit angeordnet. Dieser Schritt dient also der Vorbereitung der Aufnahme von Referenzbilddaten. Hierzu werden Referenzmarkierungen direkt im Bildaufnahmebereich positioniert. Dieser Konfiguration von Referenzmarkierungen ist ein vorbestimmter Satz von Bildaufnahmeparametern zugeordnet, die im späteren Verlauf der Nutzung der statischen Bildaufnahmeeinheit möglichst unverändert bleiben sollen.

Mithin wird die statische Bildaufnahmeeinheit vorab mit diesen vorbestimmten Bildaufnahmeparametern justiert, bevor die Referenzbilddaten aufgenommen werden.

Schließlich werden die Referenzbilddaten mit der statischen Bildaufnahmeeinheit von dem Bildaufnahmebereich mit den justierten vorbestimmten Bildaufnahmeparametern erfasst.

Vorteilhaft können diese Referenzbilddaten mit Referenzmarkierungen später während einer Nutzung der statischen Bildaufnahmeeinheit zu einer Re-Justierung genutzt werden.

Dabei müssen die dann möglicherweise dejustierten aktuellen Bildaufnahmeparameter nur angepasst werden bzw. geändert werden, bis die Markierungen in den erneut erfassten Bilddaten mit den ihnen zugeordneten Referenzmarkierungen in den Referenzbilddaten bezüglich ihrer Positionen vollständig übereinstimmen. Um die einzelnen Referenzmarkierungen voneinander unterscheiden zu können, sind diese Referenzmarkierungen vorzugsweise bezüglich ihres Erscheinungsbildes zumindest leicht unterschiedlich.

Die beschriebenen Verfahren können auch genutzt werden, um nach einem erforderlichen Austausch einer Bildaufnahmeeinheit, insbesondere einer Kamera, die Bildaufnahmeparameter und den Sichtbereich auf die Ersatzbildaufnahmeeinheit zu übertragen. Die Verfahren können ferner vorteilhaft für die Übertragung der Konfiguration einer Bildaufnahmeeinheit auf baugleiche Systeme genutzt werden. Insbesondere wenn z.B. gleichartige Systeme an unterschiedlichen Stellen im Gesamtsystem, in einem Fahrzeug, etc. oder an anderen Standorten oder weiteren baugleichen Fahrzeugen, Aufbauten, etc. benötigt werden. Die hier beschriebene Möglichkeit, die Bildaufnahmeeinheiten sehr genau und reproduzierbar zu justieren, ist insbesondere für die Bildverarbeitung von Vorteil, da im Idealfall die Erkennungssoftware nicht neu oder für jeden neuen Standort oder Aufbau konfiguriert oder gar trainiert werden muss.

Die erfindungsgemäße Re-Justageeinrichtung weist eine Eingangsschnittstelle zum Erfassen von Bilddaten, welche mit einer statischen Bildaufnahmeeinheit von einem Bildaufnahmebereich mit aktuellen Bildaufnahmeparametern akquiriert wurden, auf.

Teil der erfindungsgemäßen Re-Justageeinrichtung ist eine Lokalisierungseinheit zum Ermitteln von Posendaten von Markierungen in den erneut erfassten Bilddaten.

Die erfindungsgemäße Re-Justageeinrichtung weist auch eine Vergleichseinheit zum Vergleichen der Posendaten der Markierungen der erfassten Bilddaten mit Posendaten von Referenzmarkierungen von Referenzbilddaten, welche von dem Bildaufnahmebereich mit vorbestimmten Bildaufnahmeparametern der statischen Bildaufnahmeeinheit erfasst wurden, auf.

Teil der erfindungsgemäßen Re-Justageeinrichtung ist auch eine Re-Justageeinheit zum Anpassen der aktuellen Bildaufnahmeparameter der statischen Bildaufnahmeeinheit auf Basis des Vergleichs, im Sinne einer Annäherung der bildlich erfassten Markierungen und der zugeordneten Referenzmarkierungen. Die Annäherung erfolgt vorzugsweise, bis die Markierungen in den erneut erfassten Bilddaten mit den Markierungen in den Referenzbilddaten bezüglich ihrer Posendaten vollständig übereinstimmen. Die erfindungsgemäße Re-Justageeinrichtung teilt die Vorteile des erfindungsgemäßen Verfahrens zur Re-Justierung einer statischen Bildaufnahmeeinheit.

Die erfindungsgemäße Anordnung zur Generierung von Referenzbilddaten weist einen Bildaufnahmebereich mit angeordneten Markierungen für eine Justage einer statischen Bildaufnahmeeinheit auf.

Teil der erfindungsgemäßen Anordnung zur Generierung von Referenzbilddaten ist auch eine Justageeinheit zum Justieren der statischen Bildaufnahmeeinheit mit vorbestimmten Bildaufnahmeparametern.

Die erfindungsgemäße Anordnung zur Generierung von Referenzbilddaten umfasst zudem die statische Bildaufnahmeeinheit zum Erfassen der Referenzbilddaten von dem Bildaufnahmebereich mit justierten vorbestimmten Bildaufnahmeparametern. Die erfindungsgemäße Anordnung zur Generierung von Referenzbilddaten teilt die Vorteile des erfindungsgemäßen Verfahrens zum Generieren von Referenzbilddaten zur Re-Justierung einer statischen Bildaufnahmeeinheit.

Das erfindungsgemäße Fahrzeug, vorzugsweise ein Schienenfahrzeug, weist eine statische Bildaufnahmeeinheit zur Aufnahme eines Innenbereichs des Fahrzeugs auf.

Teil des erfindungsgemäßen Fahrzeugs ist auch eine erfindungsgemäße Re-Justageeinrichtung und eine erfindungsgemäße Anordnung zur Generierung von Referenzbilddaten. Das erfindungsgemäße Fahrzeug teilt die Vorteile der erfindungsgemäßen Re-Justageeinrichtung und der erfindungsgemäßen Anordnung zur Generierung von Referenzbilddaten.

Ein Großteil der zuvor genannten Komponenten der erfindungsgemäßen Re-Justageeinrichtung und der erfindungsgemäßen Anordnung zur Generierung von Referenzbilddaten können ganz oder teilweise in Form von Softwaremodulen in einem Prozessor eines entsprechenden Rechensystems realisiert werden, z.B. von einer Steuereinheit eines Fahrzeugs, vorzugsweise eines Schienenfahrzeugs. Eine weitgehend softwaremäßige Realisierung hat den Vorteil, dass auch schon bisher verwendete Rechensysteme auf einfache Weise durch ein Software-Update nachgerüstet werden können, um auf die erfindungsgemäße Weise zu arbeiten. Insofern wird die Aufgabe auch durch ein entsprechendes Computerprogrammprodukt mit einem Computerprogramm gelöst, welches direkt in ein Rechensystem ladbar ist, mit Programmabschnitten, um die Schritte des erfindungsgemäßen Verfahrens zur automatischen Überprüfung und Re-Justierung einer statischen Bildaufnahmeeinheit, zumindest die durch einen Computer ausführbaren Schritte, insbesondere den Schritt zum Lokalisieren von Markierungen in den erneut erfassten Bilddaten, zum Vergleichen der Positionen der Markierungen der erfassten Bilddaten mit Positionen von Referenzmarkierungen von Referenzbilddaten, welche von dem Bildaufnahmebereich mit vorbestimmten Bildaufnahmeparametern erfasst wurden, zum Anpassen der aktuellen Bildaufnahmeparameter, bis die Markierungen in den erneut erfassten Bilddaten mit den Markierungen in den Referenzbilddaten bezüglich ihrer Positionen vollständig übereinstimmen, und die durch einen Computer ausführbaren Schritte oder Teilschritte des erfindungsgemäßen Verfahrens zum Generieren von Referenzbilddaten zur automatischen Überprüfung und Re-Justierung einer statischen Bildaufnahmeeinheit auszuführen.

Ein solches Computerprogrammprodukt kann neben dem Computerprogramm gegebenenfalls zusätzliche Bestandteile, wie z. B. eine Dokumentation, und/oder zusätzliche Komponenten, auch Hardware-Komponenten, wie z.B. Hardware-Schlüssel (Dongles etc.) zur Nutzung der Software, umfassen.

Zum Transport zum Rechensystem bzw. zur Steuereinheit und/oder zur Speicherung an oder in dem Rechensystem bzw. der Steuereinheit kann ein computerlesbares Medium, z.B. ein Memorystick, eine Festplatte oder ein sonstiger transportabler oder fest eingebauter Datenträger dienen, auf welchem die von einem Rechensystem einlesbaren und ausführbaren Programmabschnitte des Computerprogramms gespeichert sind. Das Rechensystem kann z.B. hierzu einen oder mehrere zusammenarbeitende Mikroprozessoren oder dergleichen aufweisen.

Die abhängigen Ansprüche sowie die nachfolgende Beschreibung enthalten jeweils besonders vorteilhafte Ausgestaltungen und Weiterbildungen der Erfindung. Dabei können insbesondere die Ansprüche einer Anspruchskategorie auch analog zu den abhängigen Ansprüchen einer anderen Anspruchskategorie und deren Beschreibungsteilen weitergebildet sein. Zudem können im Rahmen der Erfindung die verschiedenen Merkmale unterschiedlicher Ausführungsbeispiele und Ansprüche auch zu neuen Ausführungsbeispielen kombiniert werden.

Wie bereits erwähnt umfasst der Vergleich der Posendaten bei dem erfindungsgemäßen Verfahren zur automatischen Überprüfung und Re-Justierung einer statischen Bildaufnahmeeinheit vorzugsweise mindestens den Vergleich von Daten einer der folgenden Datenarten:
- Positionsdaten der Markierungen,
- Orientierungsdaten der Markierungen.

Umfasst der Vergleich bei Datenarten, so wird die Präzision und Redundanz bei der Justierung erhöht. Weiterhin kann die Anzahl der für die Justierung benötigten Markierungen bei Hinzuziehung der Orientierungsdaten zu den Positionsdaten gegebenenfalls reduziert werden, wodurch der Aufwand der Vorbereitung einer Justierung reduziert wird.

Bevorzugt umfassen bei dem erfindungsgemäßen Verfahren zur automatischen Überprüfung und Re-Justierung einer statischen Bildaufnahmeeinheit die Markierungen eines der folgenden Identifizierungsmerkmale:
- Textmarkierungen,
- geometrisch gut erkennbare Objekte,
- langzeitstabile Merkmale in dem Bildaufnahmebereich,
- geometrische Muster,
- maschinenlesbare Muster,
- permanente Markierungen,
- nicht-permanente Markierungen, welche vor der Justierung oder Re-Justierung in reproduzierbarer Weist positionierbar sind,
- Markierungen, welche für das menschliche Auge nicht ohne technische Hilfsmittel sichtbar sind, aber von der Bildaufnahmeeinheit erfassbar sind.

Textmarkierungen könnten vorteilhaft zur Identifizierung und Unterscheidung einzelner Markierungen dienen, da die Texte Informationen über die Identität der Markierungen wiedergeben.

Auch geometrisch gut erkennbare Objekte können als natürliche Markierungen genutzt werden, um eine Re-Justierung einer Bildaufnahmeeinheit vorzunehmen. Solche Objekte sind Teil des Bildaufnahmebereichs und werden bei dessen bildlicher Erfassung automatisch mitabgebildet. Vorteilhaft müssen keine Änderungen in dem Bildaufnahmebereich vorgenommen werden, die möglicherweise Details in dem Bildaufnahmebereich verdecken könnten.

Vorteilhaft ist es, wenn die Markierungen langzeitstabil sind, so dass sie nach längerem Gebrauch der Bildaufnahmeeinheit noch sichtbar sind und für eine Re-Justierung genutzt werden können.

Von den Markierungen umfasste geometrische Muster sind vorzugsweise dreidimensional, alternativ auch Flächenmuster.

Maschinenlesbare Muster umfassen vorzugsweise Barcodes oder 2D-Codes oder AruCo-Marker.

Permanente Markierungen haben den Vorteil, dass sie vor einer Re-Justierung nicht extra positioniert werden müssen, da sie dauerhaft im Bildaufnahmebereich verbleiben können.

Nicht-permanente Markierungen können sinnvoll sein, wenn sie Details des Bildaufnahmebereichs verdecken würden, die bei dem normalen Betrieb der Bildaufnahmeeinheit sichtbar sein sollten. Werden diese nicht-permanenten Markierungen extra vor der Re-Justierung in dem Bildaufnahmebereich positioniert, so stören sie im Normalbetrieb nicht, da sie nach der Re-Justierung von selbst wieder verschwinden oder gegebenenfalls entfernt werden.

Eine vorteilhafte Ausgestaltung besteht also auch in der Möglichkeit, unsichtbare, z.B. nur im Infrarotbereich sichtbare oder bei UV-Anregung fluoreszierende Markierungen als permanente Markierungen in Einsatzumfeldern zu verwenden, die sonst nicht für das Anbringen sichtbarer permanenter Markierungen geeignet sind und damit auch für diese Umgebungen eine automatisierte Kontrolle und optional auch eine automatisierte Korrektur der Sichtfelder von Bildaufnahmeeinheiten zu ermöglichen. Derartige Markierungen werden vorzugsweise nur durch Schwarzlicht sichtbar gemacht, während sie bei gewöhnlichem Licht unsichtbar sind, so dass sie niemanden stören oder gar Ziel von Vandalismus werden.

Bevorzugt sind die Markierungen derart ausgebildet, dass sie voneinander individuell eindeutig unterscheidbar sind. Besonders bevorzugt sind sie sogar automatisiert unterscheidbar, insbesondere maschinenlesbar unterscheidbar. Vorteilhaft lassen sich aufgrund der Unterscheidbarkeit einzelne Markierungen vorbestimmten Positionen im Bildaufnahmebereich leichter zuordnen.

Bevorzugt erfolgt die Re-Justierung zu einem Zeitpunkt, zu dem der Bildaufnahmebereich und insbesondere die in dem Bildaufnahmebereich angeordneten Markierungen nicht durch zu erfassende Objekte verdeckt sind. So können beispielsweise Lichtschranken oder Sensoren die Abwesenheit zu erfassender Objekte signalisieren oder eine ausgeschaltete Hallenbeleuchtung detektieren, und damit z.B. eine Betriebsruhe feststellen und auf dieser Grundlage eine automatische Überprüfung des Kamerasystems initiieren.

Eine weitere vorteilhafte Ausgestaltung des erfindungsgemäßen Verfahrens umfasst die Auswertung von elektrischen oder digitalen Zuständen der Bildaufnahmeeinheit selbst, die geeignet sind, deren Betriebszustand (Scanvorgang, nicht in Betrieb, etc.) festzustellen. Ferner können auch verfügbare Zustände des zu überwachenden Systems digital oder direkt elektrisch überwacht werden, beispielsweise wenn für eine Bildaufnahmeeinheit in Zügen der Betriebszustand eines Fahrzeugs (Betrieb, abgestellt, ...) anhand elektrischer Zustände des Fahrzeugs oder durch digitale Signale der Fahrzeug-IT ermittelt wird.

Eine besonders vorteilhafte Ausgestaltung ist für eine oder mehrere Markierungen, die regelmäßig durch die zu erfassenden Objekte verdeckt werden, möglich (Beispiel ein Kamerasystem für das Scannen von Fahrzeugen oder Fahrzeughalbzeugen, die regelmäßig bestimmte gleiche Teile des Hintergrunds verdecken). Sobald diese Markierungen mit Hilfe der Bildaufnahmeeinheit detektiert werden, bedeutet dies, dass keine der zu erfassenden Objekte präsent sind, das System also gerade nicht benutzt wird und eine automatische Überprüfung in Form einer Re-Justierung ausgelöst werden kann. Es ist auch eine Kombination des erfindungsgemäßen Verfahrens zur automatischen Überprüfung und Re-Justierung einer statischen Bildaufnahmeeinheit mit einer Zeitsteuerung möglich. Zeitgesteuert wird z.B. zu einem Zeitpunkt, wenn eine Notwendigkeit der Bilderfassung unwahrscheinlich ist, überprüft wird, ob die Markierungen nicht durch zu erfassende Objekte verdeckt werden und in diesem Fall die automatische Überprüfung durchgeführt werden kann.

Ebenfalls bevorzugt werden die Markierungen durch Anwendung von Computer-Vision-Methoden automatisiert lokalisiert und identifiziert. Derartige Methoden lassen sich durch Training an beliebige Arten von Markierungen anpassen und sind daher besonders flexibel einsetzbar.

Die bei dem erfindungsgemäßen Verfahren zur automatischen Überprüfung und Re-Justierung einer statischen Bildaufnahmeeinheit re-justierten Bildaufnahmeparameter umfassen bevorzugt intrinsische und/oder extrinsische Bildaufnahmeparameter, insbesondere Kameraparameter. Extrinsische Bildaufnahmeparameter umfassen die Pose einer Bildaufnahmeeinheit, insbesondere einer Kamera. Intrinsische Bildaufnahmeparameter umfassen Projektionsparameter der Bildaufnahmeeinheit. Vorteilhaft können unterschiedliche Bildaufnahmeparameter, welche das Sichtfeld beeinflussen, bei der Re-Justierung korrigiert werden.

Vorzugsweise erfolgt bei dem erfindungsgemäßen Verfahren zur automatischen Überprüfung und Re-Justierung einer statischen Bildaufnahmeeinheit das Anpassen der aktuellen Bildaufnahmeparameter automatisiert. Wird als Bildaufnahmeeinheit eine sogenannte Pan-Tilt-Kamera verwendet, so erfolgt eine solche automatisierte Anpassung bevorzugt maschinell steuerbar mit Motorantrieb. Vorteilhaft muss die Re-Justierung nicht von einer Wartungsperson übernommen werden. Es genügt möglicherweise, wenn eine Wartungsperson hin und wieder prüft, ob die Re-Justierung korrekt erfolgt.

Die Anpassungsschritte sind im Detail kameraspezifisch. Die Anpassungsschritte für eine manuelle Justierung umfassen bevorzugt mindestens einen der folgenden Schritte:
- Reproduzieren aller hinterlegten Kameraparamete bzw. Bildaufnahmeparameter, d.h. manuelle Eingabe der Werte über eine Webschnittstelle oder ein Serviceprogramm, welche vom Hersteller der Kameras bzw. Bildaufnahmeeinheiten gewöhnlich bereitgestellt werden,
- mechanische Ausrichtung der Kamera bzw. Bildaufnahmeeinheit bei gleichzeitiger Beobachtung der mit den Sollpositionen augmentierten Kamerabilddaten bzw. aufgenommenen Bilddaten, bis diese zur Deckung gebracht wurden,
- Auslösen der automatischen Überprüfung (wie oben beschrieben). Besteht der Fehler weiter, Wiederholung des Ablaufs.

Die Anpassungsschritte für eine automatische Überprüfung und Re-Justierung umfassen vorzugsweise mindestens einen der folgenden Schritte:
- Messung der Differenzen der Positionen der Markierungen und der Positionen der hinterlegten Referenzmarkierungen,
- Ermitteln der Translationsvektoren der Markierungen und ggf. eines Drehwinkels,
- aus den Translationsvektoren und dem Drehwinkel lassen sich notwendige Justierungsbewegungen der Bildaufnahmeeinheit abschätzen, die in für die Bildaufnahmeeieinheit spezifische Steuerkommandos für die Motorsteuerung umgesetzt werden müssen,
- Re-Justierung mit den ermittelten Steuerkommandos,
- erneute Messung der Differenzen,
- Abbruch des Verfahrens, wenn die Differenzen die vordefinierten Toleranzen unterschreiten (Erfolgsfall) oder wenn die Differenzen nicht kleiner werden (in diesem Fall ist eine automatische Re-Justierung nicht mehr möglich, weil z.B. die Bildaufnahmeeinheit soweit verdreht oder in der Aufhängung verschoben ist, dass die Motorsteuerung dies nicht mehr ausgleichen kann),
- sind die Differenzen kleiner geworden, aber haben noch nicht die Toleranzschwelle unterschritten, beginnt der Prozess von vorn.

Eine sehr vorteilhafte Anwendung des erfindungsgemäßen Verfahrens für eine automatische Überprüfung und Re-Justierung einer statischen Bildaufnahmeeinheit bezieht sich auf das unbemerkte mechanische Verstellen von Kameras und die darauffolgende Verschlechterung der Erkennungsergebnisse, da die meist aufwändig trainierte Bildverarbeitung (landläufig als "KI" bezeichnet, weil die Bildverarbeitung durch eine künstliche Intelligenz erfolgt) auf Veränderungen des Blickfeldes in komplexen Umgebungen (z.B. Erkennung von technischen Objekten oder Personen in CCTV-Szenarien in einem Fahrzeug, insbesondere Schienenfahrzeug) empfindlich reagiert. Die verschlechterten Erkennungsergebnisse wurden dann eher der Bildverarbeitung zugschrieben, bevor jemand bemerkte, dass die Kameras verstellt waren. In der Regel wurde dann aufwändig neu trainiert. Erfindungsgemäß wurde erkannt, dass es sehr vorteilhaft ist, die Positionen der Markierungen automatisch und regelmäßig zu überwachen und bei einer Abweichung eine Re-Justierung zu erzwingen.

Ein weiterer Aspekt der Erfindung besteht dann darin, die Marker auch für die Re-Justierung verstellter Kameras oder die Justierung beim Kameratausch zu nutzen und das zu automatisieren, falls Kameras mit Motorsteuerung verwendet wurden.

Weiterhin ist neben einer automatisierten Justierung (falls die automatisierte Re-Justierung nicht konvergiert) auch eine manuelle Justierung vorgesehen.

Ein weiterer neuer Aspekt sind unsichtbare Marker, da es Umgebungen gibt, in denen sichtbare Marker im Sichtfeld aus verschiedenen Gründen (z.B. das Design, wie in einem Zugabteil oder eine historische Ansicht, z.B. in einem historischen Gebäude mit CCTV Überwachung) nicht gewünscht sind. In diesem Falle müsste man sonst vor jeder Re-Justierung die Marker anbringen, und das möglichst genau positioniert, womit nur noch eine teilautomatische Vorgehensweise möglich wäre. Hier sind dann für den Menschen unsichtbare Marker eine Lösung.

Bevorzugt erfolgt bei dem Schritt des Anpassens der aktuellen Bildaufnahmeparameter eine Überlagerung der Referenzbilddaten mit den erneut erfassten Bilddaten. Vorteilhaft kann eine Abweichung der Positionen der Markierungen von den Referenzmarkierungen leicht erkannt und korrigiert werden.

Ebenfalls bevorzugt wird bei dem Schritt des Anpassens der aktuellen Bildaufnahmeparameter durch eine automatisierte Erkennung der Markierungen eine manuelle Anpassung der aktuellen Bildaufnahmeparameter automatisiert überprüft. Bei dieser Variante wird ein Fehler einer Wartungsperson bei der Re-Justierung vorteilhaft nachträglich automatisiert erkannt und es kann eine Meldung ausgegeben werden, mit der zur Korrektur der Re-Justierung aufgefordert wird.

Besonders bevorzugt umfasst bei dem erfindungsgemäßen Verfahren zur Re-Justierung einer statischen Bildaufnahmeeinheit der Schritt des Anpassens der aktuellen Bildaufnahmeparameter eine iterative Vorgehensweise mit einer abwechselnd manuellen Anpassung der aktuellen Bildaufnahmeparameter und einer anschließenden automatisierten Prüfung der Güte der Anpassung durch eine automatisierte Erkennung der Markierungen und einen automatisierten Vergleich mit Sollpositionen der Markierungen, d.h. den Positionen der Referenzmarkierungen. Vorteilhaft kann eine vorbestimmte Präzision der Re-Justierung durch wiederholtes Anpassen der Bildaufnahmeparameter und anschließende automatische Überprüfung erreicht werden.

Die Erfindung wird im Folgenden unter Hinweis auf die beigefügten Figuren anhand von Ausführungsbeispielen noch einmal näher erläutert. Es zeigen:
- FIG 1: ein Flussdiagramm, welches ein Verfahren zur automatischen Überprüfung und zur Re-Justierung einer statischen Bildaufnahmeeinheit gemäß einem Ausführungsbeispiel der Erfindung veranschaulicht,
- FIG 2: ein Flussdiagramm, welches ein Verfahren zum Generieren von Referenzbilddaten zur automatischen Überprüfung und zur Re-Justierung einer statischen Bildaufnahmeeinheit gemäß einem Ausführungsbeispiel der Erfindung veranschaulicht,
- FIG 3: eine schematische Darstellung einer Re-Justageeinrichtung gemäß einem Ausführungsbeispiel der Erfindung,
- FIG 4: eine schematische Darstellung einer Anordnung zur Generierung von Referenzbilddaten gemäß einem Ausführungsbeispiel der Erfindung,
- FIG 5: eine schematische Darstellung eines beispielshaften Aufbaus für eine Kamerajustierung,
- FIG 6: ein Flussdiagramm, welches ein Verfahren zur automatischen Überprüfung und zur Re-Justierung einer statischen Bildaufnahmeeinheit gemäß einem Ausführungsbeispiel der Erfindung mit automatischer Überprüfung der Kamerajustierung veranschaulicht,
- FIG 7: ein Flussdiagramm, welches ein Verfahren zur automatischen Überprüfung und Re-Justierung einer statischen Bildaufnahmeeinheit gemäß einem Ausführungsbeispiel der Erfindung mit automatischer Überprüfung der Kamerajustierung mit mit unsichtbarem UV-Licht anregbaren fluoreszierenden Markierungen veranschaulicht,
- FIG 8: eine schematische Darstellung eines Aufnahmebereichs mit verdrehter und ausgerichteter Bildaufnahmeeinheit,
- FIG 9: ein Flussdiagramm, welches ein Verfahren zur automatischen Überprüfung und Re-Justierung einer statischen Bildaufnahmeeinheit gemäß einem Ausführungsbeispiel der Erfindung mit maschinell unterstützter manueller Kamerajustierung veranschaulicht,
- FIG 10: ein Flussdiagramm, welches ein Verfahren zur automatischen Überprüfung und zur Re-Justierung einer statischen Bildaufnahmeeinheit gemäß einem Ausführungsbeispiel der Erfindung mit maschinell unterstützter Kamerajustierung mit sofortiger automatischer Überprüfung veranschaulicht,
- FIG 11: ein Flussdiagramm, welches ein Verfahren zur automatischen Überprüfung und zur Re-Justierung einer statischen Bildaufnahmeeinheit gemäß einem Ausführungsbeispiel der Erfindung mit vollautomatischer Kamerajustierung veranschaulicht,
- FIG 12: eine schematische Darstellung eines Schienenfahrzeugs mit einer Re-Justageeinrichtung gemäß einem Ausführungsbeispiel der Erfindung.

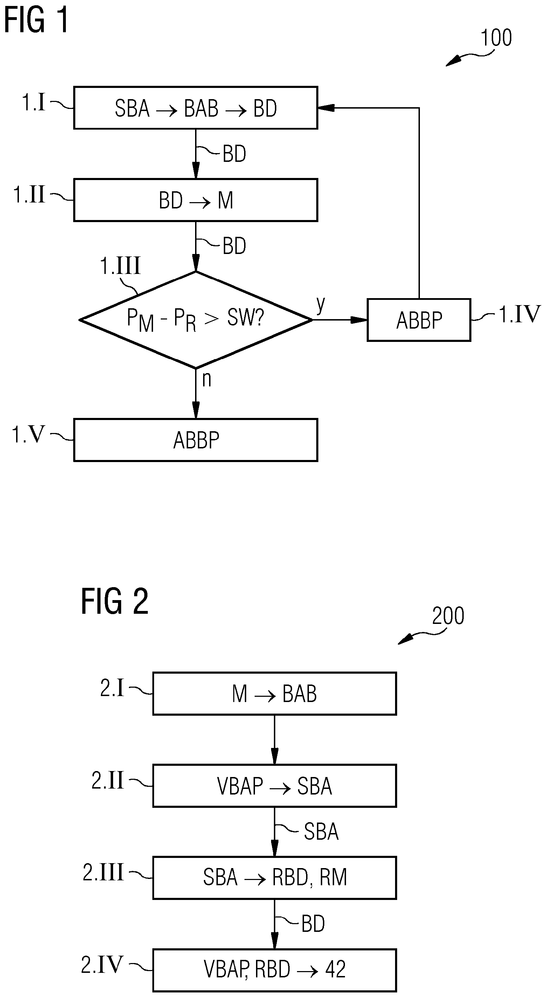

In FIG 1 ist ein Flussdiagramm 100 veranschaulicht, welches ein Verfahren zur automatischen Überprüfung und zur Re-Justierung einer statischen Bildaufnahmeeinheit SBA gemäß einem Ausführungsbeispiel der Erfindung symbolisiert. In FIG 1 wird der allgemeine Ablauf des Verfahrens veranschaulicht.

Bei dem Schritt 1.I werden Bilddaten BD mit der statischen Bildaufnahmeeinheit SBA von einem Bildaufnahmebereich BAB erfasst. Der Bildaufnahmebereich BAB ist zum Beispiel ein Bereich, der von der Bildaufnahmeeinheit SBA dauerhaft überwacht wird. Soll nun die korrekte Justierung der Bildaufnahmeeinheit SBA überprüft und gegebenenfalls korrigiert werden, so werden aktuelle Bilddaten BD von dem Bildaufnahmebereich BAB benötigt. Mit den Bilddaten BD soll überprüft werden, ob sich die Ausrichtung der Bildaufnahmeeinheit SBA unerwünscht geändert hat oder ob sich andere Bildaufnahmeparameter geändert haben, die ebenfalls Einfluss auf den konkreten Bildaufnahmebereich BAB haben, der von den Bilddaten BD abgebildet wird.

Hierzu werden bei dem Schritt 1.II Markierungen M in den erfassten Bilddaten BD lokalisiert und identifiziert. Die Markierungen M dienen dazu, bestimmte Positionen in den Bilddaten BD zu identifizieren, von denen bekannt ist, an welcher Stelle diese Markierungen M in den Bilddaten BD auftreten sollen, wenn die Bildaufnahmeparameter korrekt sind, d.h. sich nicht unbemerkt verändert haben.

Anschließend erfolgt bei dem Schritt 1.III ein Vergleich der Positionen P_{M} der Markierungen M der erfassten Bilddaten BD mit Referenzpositionen P_{R} von Referenzmarkierungen RM von Referenzbilddaten RBD (siehe FIG 2), welche von dem Bildaufnahmebereich BAB mit vorbestimmten Bildaufnahmeparametern VBAP (siehe FIG 2) erfasst wurden. Diese Referenzmarkierungen RM (siehe FIG 2) werden an den Referenzpositionen P_{R} als Augmentierungen mit den Bilddaten BD überlagert, so dass entweder ein Benutzer Abweichungen zwischen den Positionen P_{M} der Markierungen M und den Referenzpositionen P_{R} der Referenzmarkierungen RM sofort erkennen kann oder diese Abweichungen automatisiert, beispielsweise durch Computer-Vision-Algorithmen, ermittelbar sind. Überschreitet die Abweichung zwischen den beiden Positionen P_{M}, P_{R} einen vorbestimmten Schwellwert SW, was in FIG 1 mit "y" gekennzeichnet ist, so wird zu dem Schritt 1.IV übergegangen.

Bei dem Schritt 1.IV erfolgt eine Anpassung der aktuellen Bildaufnahmeparameter ABBP. Anschließend wird das Verfahren bei dem Schritt 1.I fortgesetzt und es werden neue Bilddaten BD mit den angepassten Bildaufnahmeparametern ABBP generiert. Die Schritte 1.I bis 1.IV werden iterativ so lange fortgesetzt, bis das bei dem Schritt 1.III geforderte Kriterium erfüllt ist, d.h. bis die Markierungen M in den erneut erfassten Bilddaten BD mit den Referenzmarkierungen RM (siehe FIG 2) in den Referenzbilddaten RBD (siehe FIG 2) bezüglich ihrer Positionen P_{M}, P_{R} ausreichend übereinstimmen.

Wird bei dem Schritt 1.III festgestellt, dass die beiden Positionen P_{M}, P_{R} einen vorbestimmten Schwellwert SW nicht überschreiten, was in FIG 1 mit "n" gekennzeichnet ist, so wird zu dem Schritt 1.V übergegangen, bei dem die angepassten Bildaufnahmeparameter ABBP als gültige Bildaufnahmeparameter festgelegt werden und die Re-Justierung abgeschlossen wird.

In FIG 2 ist ein Flussdiagramm 200 veranschaulicht, welches ein Verfahren zum Generieren von Referenzbilddaten RBD zur automatischen Überprüfung und Re-Justierung einer statischen Bildaufnahmeeinheit SBA gemäß einem Ausführungsbeispiel der Erfindung veranschaulicht. Das in FIG 2 veranschaulichte Verfahren umfasst einen Justagevorgang und dient als Vorbereitungsprozess, um Referenzbilddaten RBD zu erzeugen, welche später für eine Re-Justierung genutzt werden können.

Bei dem Schritt 2.I werden Markierungen M in einem Bildaufnahmebereich BAB der statischen Bildaufnahmeeinheit SBA auf Gegenständen konkret angeordnet, welche bei dem in FIG 2 veranschaulichten Verfahren als Referenzmarkierungen RM genutzt werden. Die Markierungen M können zum Beispiel bestimmte Codes umfassen, welche die Markierungen M eindeutig identifizieren.

Bei dem Schritt 2.II wird die statische Bildaufnahmeeinheit SBA mit vorbestimmten Bildaufnahmeparametern VBAP justiert. Die Justage der statischen Bildaufnahmeeinheit SBA kann zum Beispiel manuell erfolgen.

Bei dem Schritt 2.III werden Referenzbilddaten RBD mit der statischen Bildaufnahmeeinheit SBA von dem Bildaufnahmebereich BAB mit justierten vorbestimmten Bildaufnahmeparametern VBAP und Referenzmarkierungen RM erfasst.

Bei dem Schritt 2.IV werden die erfassten Referenzbilddaten RBD in einem Datenspeicher 42 zusammen mit den zugehörigen Bildaufnahmeparametern VBAP abgespeichert. Die abgespeicherten Referenzbilddaten RBD können später für eine Re-Justierung der statischen Bildaufnahmeeinheit SBA genutzt werden.

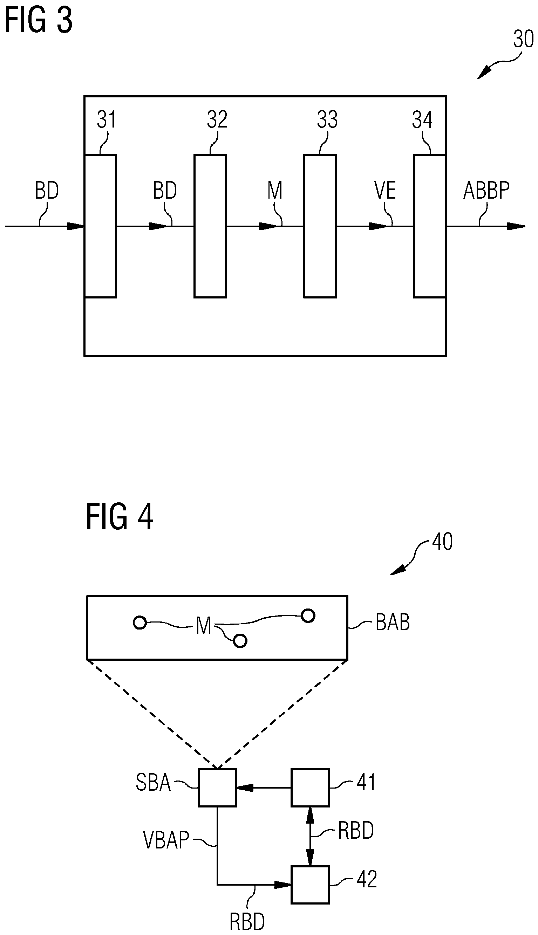

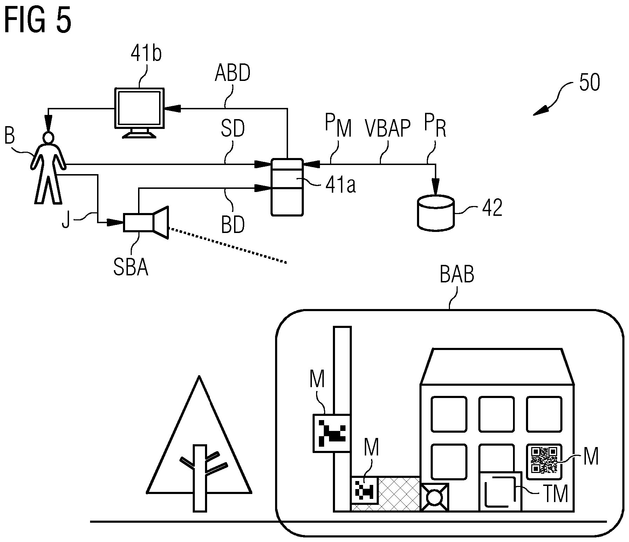

In FIG 3 ist eine schematische Darstellung einer Re-Justageeinrichtung 30 gemäß einem Ausführungsbeispiel der Erfindung veranschaulicht. Teil der Re-Justageeinrichtung 30 ist eine Eingangsschnittstelle 31 zum Erfassen von Bilddaten BD von einem Bildaufnahmebereich BAB, welche von einer statischen Bildaufnahmeeinheit SBA aufgenommen wurden (siehe z.B. in FIG 5).

Die Re-Justageeinrichtung 30 umfasst außerdem eine Lokalisierungseinheit 32 zum Lokalisieren von Markierungen M in den erfassten Bilddaten BD.

Die Re-Justageeinrichtung 30 weist auch eine Vergleichseinheit 33 auf. Die Vergleichseinheit 33 ist dazu eingerichtet, die Positionen P_{M} der Markierungen M der erfassten Bilddaten BD mit Positionen P_{R} von Referenzmarkierungen RM von Referenzbilddaten RBD, welche von dem Bildaufnahmebereich BAB mit vorbestimmten Bildaufnahmeparametern VBAP erfasst wurden, zu vergleichen und ein Vergleichsergebnis VE zu ermitteln.

Beispielsweise wird ermittelt, dass die Positionen P_{M} der Markierungen M der erfassten Bilddaten BD von den Positionen P_{R} der den Markierungen M der erfassten Bilddaten BD zuzuordnenden Referenzmarkierungen RM der Referenzbilddaten RBD zu stark abweichen. Eine solche Abweichung wird als Vergleichsergebnis VE an eine Re-Justageeinheit 34 übermittelt, die ebenfalls Teil der Re-Justageeinrichtung 30 ist. Die Re-Justageeinheit 34 ist dazu eingerichtet, die aktuellen Bildaufnahmeparameter ABBP der statischen Bildaufnahmeeinheit SBA anzupassen, bis die Markierungen M in den erneut erfassten Bilddaten BD mit den Markierungen RM in den Referenzbilddaten RBD bezüglich ihrer Positionen P_{M}, P_{R} vollständig übereinstimmen.

In FIG 4 ist eine schematische Darstellung einer Anordnung 40 zur Generierung von Referenzbilddaten RBD gemäß einem Ausführungsbeispiel der Erfindung veranschaulicht.

Die Anordnung 40 zur Generierung von Referenzbilddaten RBD weist einen Bildaufnahmebereich BAB mit angeordneten Markierungen M für eine Justage einer statischen Bildaufnahmeeinheit SBA auf.

Teil der Anordnung 40 ist eine Justageeinheit 41 zum Justieren der statischen Bildaufnahmeeinheit SBA mit vorbestimmten Bildaufnahmeparametern VBAP.

Die Anordnung 40 umfasst auch eine statische Bildaufnahmeeinheit SBA zum Erfassen der Referenzbilddaten RBD von dem Bildaufnahmebereich BAB mit justierten vorbestimmten Bildaufnahmeparametern VBAP.

Die Anordnung 40 weist darüber hinaus auch einen Datenspeicher 42 auf, mit dem die erfassten Referenzbilddaten RBD und zugehörige Bildaufnahmeparameter VBAP abgespeichert werden und für eine spätere Re-Justage bereitgehalten werden.

In FIG 5 ist eine schematische Darstellung eines beispielshaften Aufbaus 50 einer Re-Justageeinrichtung für eine Justierung einer Bildaufnahmeeinheit SBA, insbesondere einer Kamera SBA, gemäß einem Ausführungsbeispiel der Erfindung veranschaulicht.

Für den beispielhaften Aufbau 50 gemäß FIG 5 seien Markierungen M eines beliebigen oben beschriebenen Typs bereits vorhanden (entweder permanent oder sie sind vorab vor dem Einsatz der Kamera SBA angebracht worden). Die Markierungen M sollten dafür eindeutig unterscheidbar, beispielsweise Weise maschinenlesbar unterscheidbar, bzw. identifizierbar sein und jede dieser individuell unterscheidbaren Markierungen sollte nur ein einziges Mal in einem Sichtbereich BAB bzw. für eine Kamera SBA vorkommen, um sie eindeutig zu identifizieren. Eine Markierung M kann zum Beispiel durch einen Textmarker TM individualisiert werden. Weiterhin werden nun durch eine Verarbeitungseinheit 41a, die Bilddaten BD für alle Sichtbereiche aller Kameras SBA erfasst, falls mehrere dieser Arten von Bildaufnahmeeinheiten existieren. Die Verarbeitungseinheit 41a umfasst die Funktionen der Re-Justageeinrichtung 30, welche in FIG 3 gezeigt ist. Sie umfasst auch die Funktionen der Justageeinheit der in FIG 4 veranschaulichten Anordnung 40.

Von der Verarbeitungseinheit 41a werden automatisch mit Computer Vision (CV) Methoden die sichtbaren Markierungen M als Referenzmarkierungen RM sowie deren Positionen P_{R} und Orientierungen erkannt und in einem nichtflüchtigen Speicher, der jeweiligen Bildaufnahmeeinheit, dem jeweiligen Sichtbereich BAB und der jeweiligen Markierung M zugeordnet abgelegt. Ferner werden optional zusätzlich für den Einsatzzweck relevante Kameraparameter bzw. Bildaufnahmeparameter, sofern diese maschinenlesbar sind, erfasst.

Dabei kann es vorteilhaft sein, die Markierungen M, ohne das Vorhandensein der eigentlich zu erfassenden Objekte aufzunehmen, da in diesem Falle auch das Anbringen von Markierungen M auf sonst durch diese Objekte verdeckten Hintergrundbereichen ermöglicht wird. Mit den so erfassten Daten, können nun mit dem gleichen Aufbau 50 jederzeit alle einmal auf diese Weise erfassten Sichtbereiche BAB der jeweiligen Kameras SBA überprüft oder reproduziert werden. Für temporär angebrachte Markierungen M müssen diese vor jedem Messvorgang möglichst genau an den ursprünglichen Orten der Erstaufnahme gemäß FIG 5 wieder angebracht werden. Für den Fall permanenter Markierungen M kann die beschriebene Überprüfung vollautomatisch, z.B. zeitgesteuert, manuell oder auf Grund von äußeren Ereignissen oder Signalen erfolgen.

Für die eigentliche Überprüfung bzw. Re-Justierung wird wieder das in FIG 5 veranschaulichte System verwendet. Eine Steuerung der Re-Justierung kann durch Eingabe von Steuerbefehlen SD durch einen Benutzer in die Verarbeitungseinheit 41a erfolgen. Die Verarbeitungseinheit 41a gibt selbst Rückmeldung über eine Anzeigeeinheit 41b. Auf der Anzeigeeinheit 41b können zum Beispiel augmentierte Bilddaten ABD, bei denen die Referenzmarkierungen den Bilddaten BD überlagert sind, angezeigt werden. Der Benutzer B kann die Bildaufnahmeparameter der Bildaufnahmeeinheit SBA auch direkt durch manuelle Justierung J verändern.

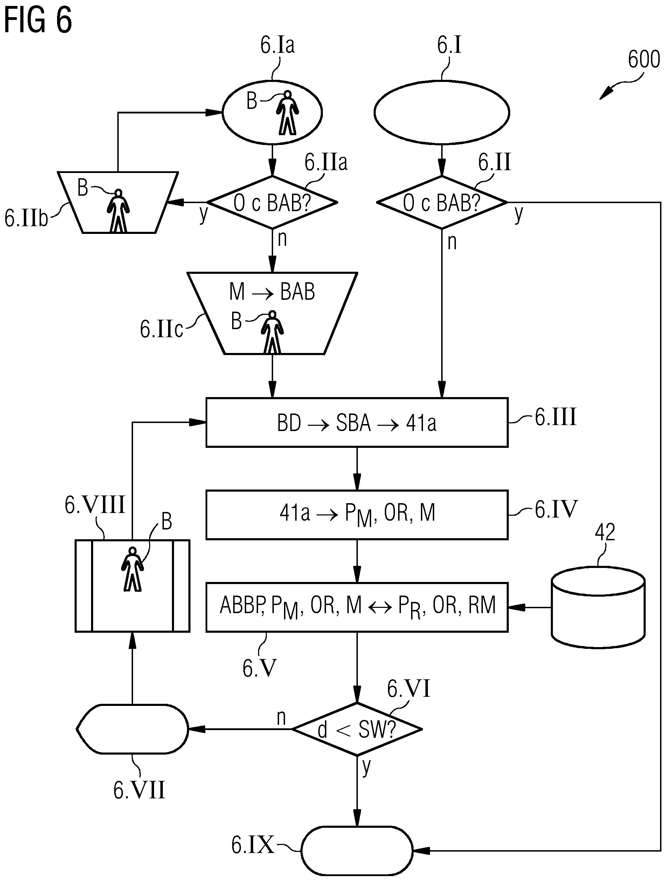

Der Ablauf der automatischen Überprüfung ist in FIG 6 veranschaulicht. In FIG 6 ist ein Flussdiagramm 600 gezeigt, welches ein Verfahren zur Re-Justierung einer statischen Bildaufnahmeeinheit gemäß einem Ausführungsbeispiel der Erfindung mit automatischer Überprüfung der Kamerajustierung veranschaulicht.

Dabei erfolgt zunächst bei dem Schritt 6.I ein automatisierter Start des Verfahrens durch einen Timer oder ein vorbestimmtes Ereignis. Alternativ kann auch ein manueller Start des Verfahrens bei dem Schritt 6.Ia durch einen Benutzer B erfolgen.

Bei dem Schritt 6.II und alternativ bei dem Schritt 6.IIa wird ermittelt, ob Objekte O sich im Sichtbereich BAB einer Kamera SBA befinden. Bei dem alternativen Schritt 6.IIb werden Objekte O von dem Benutzer B selbst entfernt. Dagegen erfolgt bei dem automatischen Vorgehen rechts in FIG 6 ein automatisierter Abbruch der Re-Justierung bei dem Schritt 6.IX, falls sich die Objekte O im Sichtbereich BAB der Kamera SBA befinden. In diesem Fall zeigen die "Objekte" an, dass die Gesamtanordnung gerade in Betrieb ist und eine Re-Justierungen zu einem anderen Zeitpunkt durchgeführt werden sollte.

Sind keine Objekte O im Sichtbereich BAB sichtbar, was in FIG 6 mit "n" gekennzeichnet ist, so wird entweder direkt mit einer Bildaufnahme bei dem Schritt 6.III begonnen oder alternativ im manuellen Fall, welcher links in FIG 6 veranschaulicht ist, werden zunächst noch manuell Markierungen M in dem Sichtbereich BAB angeordnet.

Weiterhin werden bei dem Schritt 6.III wie bei der initialen Erfassung durch die Verarbeitungseinheit 41a die Kamerabilder BD für alle Sichtbereiche BAB aller Kameras SBA erfasst.

Von der Verarbeitungseinheit 41a werden bei dem Schritt 6.IV automatisch wieder mit Computer Vision Methoden die Markierungen M, sowie deren Positionen P_{M} und deren Orientierungen OR erkannt und vermessen. Optional werden wieder relevante KameraParameter ABBP, sofern diese maschinenlesbar sind, ausgelesen.

Dann erfolgt bei dem Schritt 6.V für alle Sichtbereiche aller Kameras SBA ein Abgleich der erfassten Bildaufnahmeparameter ABBP sowie der Positionen P_{M} und Orientierungen OR_{M} der Markierungen M mit den ursprünglich erfassten und abgespeicherten Werten P_{R}, OR_{R} (den Sollwerten bzw. Referenzwerten) für die entsprechenden Sichtbereiche der jeweiligen Kameras SBA.

Ergeben sich hierbei bei dem Schritt 6.VI Differenzen d, die sich außerhalb von vorher definierten Toleranzen SW bewegen, was in FIG 6 mit "n" gekennzeichnet ist, können bei dem Schritt 6.VII entsprechende Aktionen ausgelöst werden.

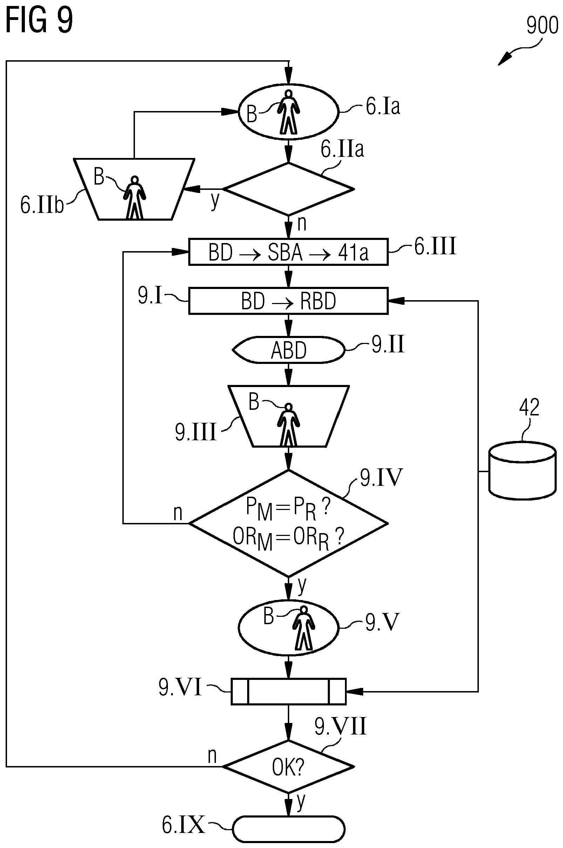

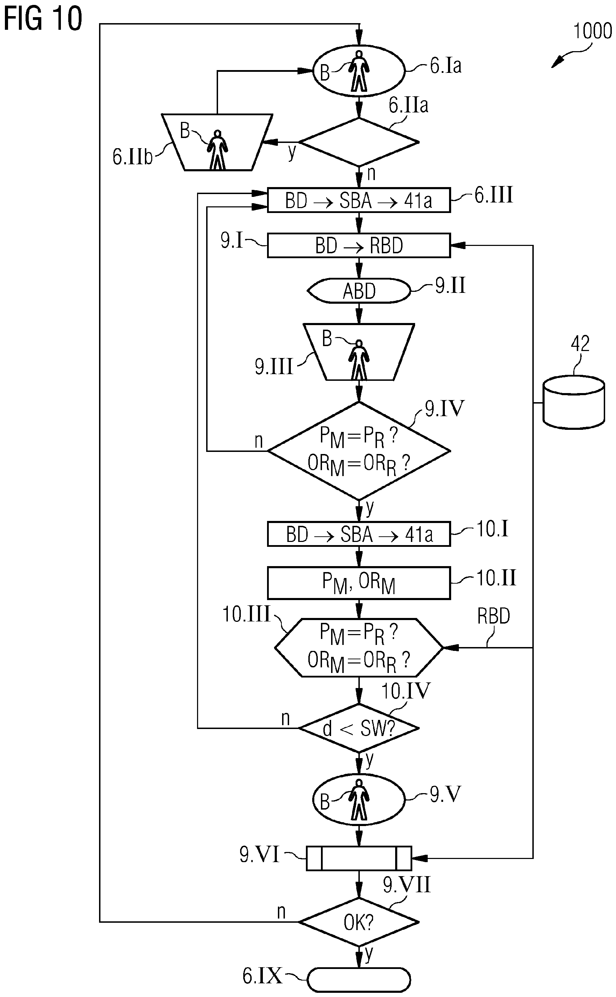

So kann der Benutzer B oder Betreiber der Anlage alarmiert werden, um bei dem Schritt 6.VIII eine erneute Justierung vorzunehmen, also zu dem Schritt 6.III zurückzukehren, oder es kann im Falle von automatisch justierbaren Kameras, wie z.B. maschinell steuerbaren Pan-Tilt Kameras mit Motorantrieb, in einem gewissen Rahmen eine automatische Korrektur der Justierung vorgenommen werden. Eine solche Vorgehensweise ist in FIG 9 oder FIG 10 veranschaulicht.

Wird bei dem Schritt 6.VI ermittelt, dass die Toleranzen SW eingehalten werden, was in FIG 6 mit "y" gekennzeichnet ist, so wird zu dem Schritt 6.IX übergegangen und die Re-Justierung beendet.

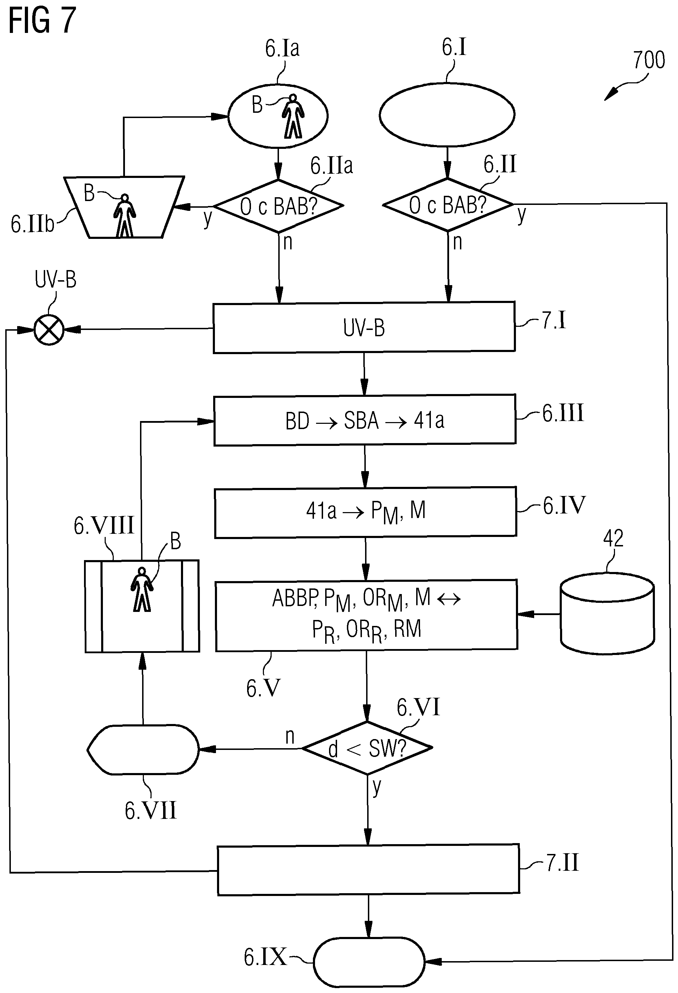

Für den Fall der Verwendung von unsichtbaren, durch UV-Anregung fluoreszierenden Markierungen M, muss vor dem eigentlichen Prüfprozess die UV-Beleuchtung UV-B ein- und danach wieder ausgeschalten werden. Der dafür modifizierte Ablauf ist in FIG 7 dargestellt.

In FIG 7 ist ein Flussdiagramm 700 gezeigt, welches ein Verfahren Re-Justierung einer statischen Bildaufnahmeeinheit SBA gemäß einem Ausführungsbeispiel der Erfindung mit automatischer Überprüfung der Kamerajustierung mit mit unsichtbarem UV-Licht anregbaren fluoreszierenden Markierungen M veranschaulicht.

Die Bezeichnung der im Vergleich zu FIG 6 unverändert gebliebenen Schritte sind in FIG 7 beibehalten worden und werden an dieser Stelle nicht erneut kommentiert. Als neuer Schritt ist ein Schritt 7.I hinzugekommen, der dem bisherigen Schritt 6.II bzw. 6.Ila nachfolgt und ein automatisches Einschalten der UV-Beleuchtung UV-B umfasst. Weiterhin ist in FIG 7 ein neuer Schritt 7.II enthalten, der dem bisherigen Schritt 6.VI nachfolgt und ein automatisches Ausschalten der UV-Beleuchtung UV-B vorsieht. Der eigentliche Vergleich zwischen den Markierungen M und den Referenzmarkierungen RM erfolgt zwischen den Beiden Schritten 7.I und 7.II wie bereits in FIG 6 veranschaulicht, mit den Schritten 6.III bis 6.VIII.

Der in FIG 5 beschriebene Aufbau 50 kann weiterhin verwendet werden, um eine sich aus der Überprüfung ergebende erforderliche Justierung der Kameras SBA zu unterstützen. In der einfachsten Variante können die erfassten und nichtflüchtig gespeicherten Daten verwendet werden, um dem Benutzer B bei der Justierung der Sichtbereiche BAB eine Hilfestellung zu geben. Dazu werden die Positionen P_{M} und Orientierungen OR der Markierungen M durch die Verarbeitungseinheit 41a über den Livestream der Kameras SBA geeignet überlagert, d.h. in das Livebild augmentiert.

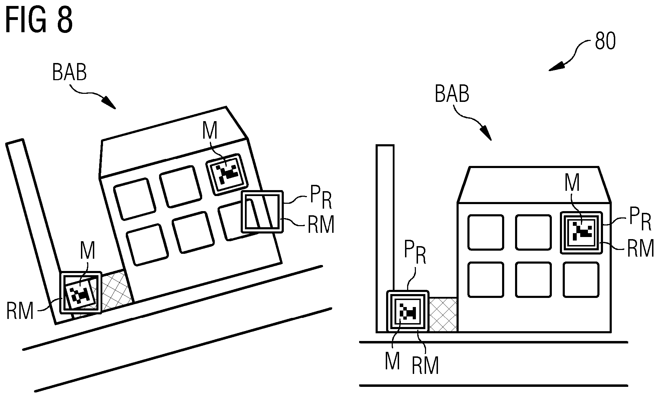

Beispiele für derartige Augmentierungen sind in FIG 8 dargestellt. In FIG 8 ist eine schematische Darstellung 80 eines Aufnahmebereichs BAB mit verdrehter (links) und ausgerichteter Bildaufnahmeeinheit (rechts) gezeigt. Zusätzlich können auch noch optional Hinweise in Form von Text oder Richtungspfeilen eingeblendet werden. Sobald der Operator die augmentierten Rahmen als Referenzmarkierungen RM mit den im Livestream sichtbaren Markierungen M zur Deckung gebracht hat, kann der Prozess abgeschlossen werden. Eine vorteilhafte Ergänzung für die manuelle Justierung kann in der Auslösung der automatischen Überprüfung gemäß dem in FIG 9 veranschaulichten Verfahren bestehen, die die erfolgreiche Justierung der Kameras noch einmal bestätigt oder verwirft.

In FIG 9 ist ein Flussdiagramm 900 gezeigt, welches ein Verfahren zur Re-Justierung einer statischen Bildaufnahmeeinheit gemäß einem Ausführungsbeispiel der Erfindung mit maschinell unterstützter manueller Kamerajustierung veranschaulicht.

Zunächst werden die bereits aus FIG 6 bekannten Schritte 6.Ia, 6.Ila, 6.IIb und 6.III durchgeführt, wobei zunächst ein Start des Verfahrens, gegebenenfalls eine Beseitigung von Objekten in dem Bildaufnahmebereich bzw. Sichtbereich BAB erfolgt und schließlich eine Bildaufnahme BD durch die Bildaufnahmeeinheit SBA erfolgt, welche in der Verarbeitungseinheit 41a weiterprozessiert wird.

Anders als in FIG 6 oder FIG 7 erfolgt nun jedoch bei dem Schritt 9.I eine Überlagerung der aktuellen Bilddaten BD mit Positionen P_{R} und Orientierungen OR_{R} der Referenzbilddaten RBD, um die Positionen und Orientierungen von Markierungen für eine erwartete Messung zu verdeutlichen. Bei dem anschließenden Schritt 9.II erfolgt dann eine Anzeige dieser augmentierten Bilddaten ABD. Bei dem nachfolgenden Schritt 9.III wird eine manuelle Justierung der Kamera SBA durchgeführt. Schließlich erfolgt bei dem Schritt 9.IV eine manuelle Prüfung, ob die Positionen P_{M} und Orientierungen der Markierungen M der Bilddaten BD mit den Referenzpositionen P_{R} und Referenzorientierungen der Referenzbilddaten RBD übereinstimmen. Ist das nicht der Fall, was in FIG 9 mit "n" gekennzeichnet wird, wird zu dem Schritt 6.III zurückgekehrt und die manuelle Justierung wird weitergeführt. Wird eine Übereinstimmung der Positionen P_{M} und Orientierungen OR_{M} der Markierungen M der Bilddaten BD mit den Referenzpositionen P_{R} und Referenzorientierungen OR_{R} der Referenzbilddaten RBD von dem Benutzer B ermittelt, was in FIG 9 mit "y" gekennzeichnet ist, so wird zu dem Schritt 9.V übergegangen, bei dem ein Erfolg der Justierung durch den Benutzer B eingegeben wird und anschließend erfolgt bei dem Schritt 9.VI eine finale automatisierte Überprüfung der manuellen Re-Justierung. Wird bei dem Schritt 9.VII gemeldet, dass die Überprüfung eine erfolgreiche Re-Justierung ergeben hat, was in FIG 9 mit "y" gekennzeichnet ist, so wird zu dem Schritt 6.IX übergegangen und die Re-Justierung beendet. Ergibt die automatische Überprüfung bei Schritt 9.VI bzw. 9.VII, dass die Re-Justierung nicht erfolgreich gewesen ist, was in FIG 9 mit "n" gekennzeichnet ist, so wird zu dem Schritt 6.Ia zurückgekehrt und der gesamte Vorgang wird gegebenenfalls wiederholt.

Eine weitere vorteilhafte Ausgestaltung besteht darin, während der Justierung durch den Operator bereits in jeder Iteration, d.h. nach jeder erneuten Kamerajustierung, die automatische Erkennung durchzuführen und einen möglichen Erfolg im Livestream anzuzeigen, hervorzuheben und beispielsweise akustisch zu signalisieren.

Diese Ausgestaltung ist in FIG 10 veranschaulicht. In FIG 10 ist ein Flussdiagramm 1000 gezeigt, welches ein Verfahren zur Re-Justierung einer statischen Bildaufnahmeeinheit gemäß einem Ausführungsbeispiel der Erfindung mit maschinell unterstützter Kamerajustierung mit sofortiger automatischer Überprüfung veranschaulicht.

Bei dem in FIG 10 veranschaulichten Ausführungsbeispiel werden zunächst die bereits aus FIG 6 bekannten Schritte 6.Ia, 6.Ila, 6.IIb und 6.III durchgeführt, wobei zunächst ein Start des Verfahrens, gegebenenfalls eine Beseitigung von Objekten in dem Bildaufnahmebereich bzw. Sichtbereich BAB erfolgt und schließlich eine Bildaufnahme von Bilddaten BD durch die Bildaufnahmeeinheit SBA erfolgt, welche in der Verarbeitungseinheit 41a weiterprozessiert werden.

Nachfolgend erfolgt nun wie bei dem in FIG 9 veranschaulichten Ausführungsbeispiel bei dem Schritt 9.I eine Überlagerung der aktuellen Bilddaten BD mit Positionen P_{R} und Orientierungen OR_{R} der Referenzbilddaten RBD, um die Positionen und Orientierungen der Markierungen für eine erwartete Messung zu verdeutlichen. Bei dem anschließenden Schritt 9.II erfolgt dann eine Anzeige dieser augmentierten Bilddaten ABD. Bei dem nachfolgenden Schritt 9.III wird eine manuelle Justierung der Kamera SBA durchgeführt. Schließlich erfolgt bei dem Schritt 9.IV eine manuelle Prüfung, ob die Positionen P_{M} und Orientierungen OR_{M} der Markierungen M der Bilddaten BD mit den Referenzpositionen P_{R} und Referenzorientierungen OR_{R} der Referenzbilddaten RBD übereinstimmen. Ist das nicht der Fall, was in FIG 9 mit "n" gekennzeichnet wird, so wird zu dem Schritt 6.III zurückgekehrt und die manuelle Justierung wird weitergeführt. Wird eine Übereinstimmung der Positionen P_{M} und Orientierungen OR_{M} der Markierungen M der Bilddaten BD mit den Referenzpositionen P_{R} und Referenzorientierungen OR_{R} der Referenzmarkierungen RM der Referenzbilddaten RBD von dem Benutzer B ermittelt, was in FIG 9 mit "y" gekennzeichnet ist, so wird zu dem Schritt 10.I übergegangen. Bei dem Schritt 10.I erfolgt nun eine erneute Bildaufnahme durch eine Kamera SBA von dem Sichtbereich BAB und eine Verarbeitung der Bilddaten BD durch die Verarbeitungseinheit 41a.

Anschließend erfolgt bei dem Schritt 10.II eine automatische Bestimmung der Positionen P_{M} und Orientierungen OR_{M} aller Markierungen M im Sichtbereich BAB.

Weiterhin erfolgt bei dem Schritt 10.III nun ein automatisierter Vergleich der ermittelten Positionen P_{M} und Orientierungen OR_{M} aller Markierungen M mit entsprechenden Referenzpositionen P_{R} und Referenzorientierungen OR_{R} der Referenzbilddaten RBD aus dem Datenspeicher 42.

Bei dem Schritt 10.IV wird ermittelt, ob die Differenzen d zwischen den ermittelten Positionen P_{M} und Orientierungen OR_{M} aller Markierungen M und den entsprechenden Referenzpositionen P_{R} und Referenzorientierungen OR_{R} der Referenzbilddaten RBD einen vorbestimmten Schwellwert SW unterschreiten.

Wird bei dem Schritt 10.IV eine ausreichende Übereinstimmung der Positionen P_{M} und Orientierungen OR_{M} der Markierungen M der Bilddaten BD mit den Referenzpositionen P_{R} und Referenzorientierungen OR_{R} der Referenzbilddaten RBD von dem Benutzer B ermittelt, was in FIG 10 mit "y" gekennzeichnet ist, so wird zu dem Schritt 9.V übergegangen, bei dem ein Erfolg der Justierung durch den Benutzer B und die automatische Unterstützung festgestellt wird und anschließend erfolgt bei dem Schritt 9.VI eine finale automatisierte Überprüfung der manuellen Re-Justierung. Wird bei dem Schritt 9.VII gemeldet, dass die Überprüfung eine erfolgreiche Re-Justierung ergeben hat, was in FIG 9 mit "y" gekennzeichnet ist, so wird zu dem Schritt 6.IX übergegangen und die Re-Justierung beendet.

Ergibt die automatische Überprüfung bei Schritt 9.VI bzw. 9.VII, dass die Re-Justierung nicht erfolgreich gewesen ist, was in FIG 9 mit "n" gekennzeichnet ist, so wird zu dem Schritt 6.Ia zurückgekehrt und der gesamte Vorgang gegebenenfalls wiederholt. I

Eine weitergehende Automatisierung des Justierungsvorgangs ist für Kameras mit Motorsteuerung des Sichtfeldes (z.B. Pan-Tilt Kameras) möglich. In diesem Falle können eventuelle mechanisch verursachte Abweichungen der Kameraaufhängung durch die Kameras in einem gewissen Umfang selbsttätig ausgeglichen werden.

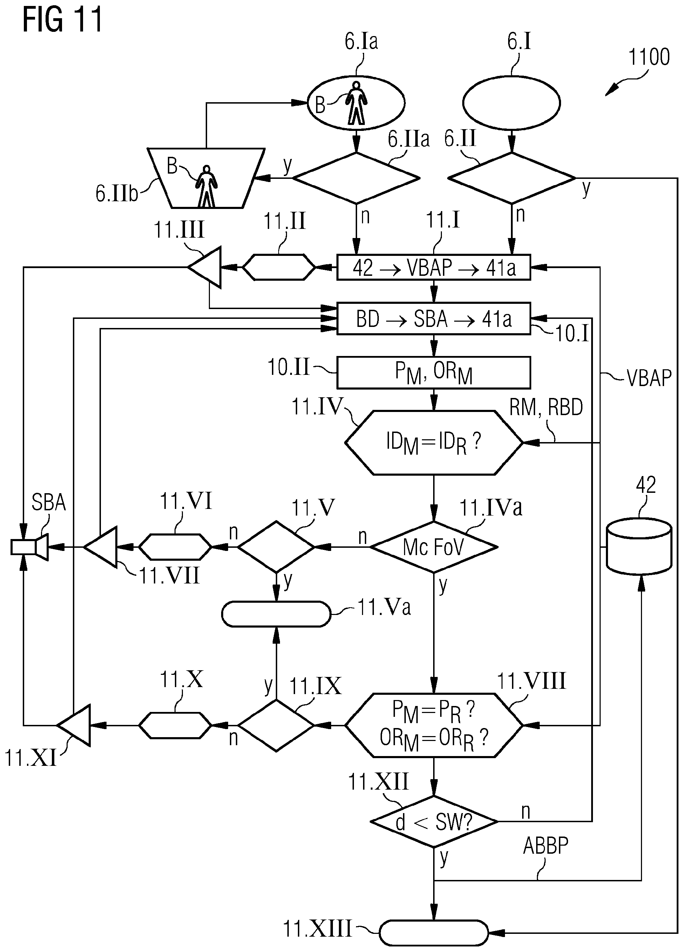

Der Ablauf der genannten vollautomatischen Korrektur ist in FIG 11 veranschaulicht. In FIG 11 ist ein Flussdiagramm 1100 gezeigt, welches ein Verfahren zur automatischen Überprüfung und zur automatischen Re-Justierung einer statischen Bildaufnahmeeinheit gemäß einem Ausführungsbeispiel der Erfindung mit vollautomatischer Kamerajustierung veranschaulicht.

Bei dem in FIG 11 veranschaulichten Ausführungsbeispiel werden zunächst die bereits aus FIG 6 bekannten Schritte 6.Ia, 6.I, 6.II, 6.IIa und 6.IIb durchgeführt, wobei zunächst ein Start des Verfahrens und gegebenenfalls eine Beseitigung von Objekten in dem Bildaufnahmebereich bzw. Sichtbereich BAB erfolgt.

Anschließend werden bei dem Schritt 11.I gespeicherte Kameraparameter bzw. Bildaufnahmeparameter VBAP (z.B. Zoomfaktor, Belichtung, vordefinierte Sichtbereiche, etc.) zunächst von der Verarbeitungseinheit 41a aus einem Datenspeicher 42 eingelesen.

Anschließend werden bei dem Schritt 11.II Kamerasteuersequenzen für eine Einstellung der Kamera oder eine Überprüfung bzw. Re-Justierung berechnet. Beispielsweise umfassen die Kamerasteuersequenzen den Befehl, die Kamera um 10° nach rechts zu drehen.

Anschließend erfolgt bei dem Schritt 11.III das Konfigurieren der Kamera SBA durch Anwendung der bei dem Schritt 11.II ermittelten Kamerasteuersequenzen.

Nachfolgend wird zu dem Schritt 10.I übergegangen und es erfolgt nun eine Bildaufnahme durch eine Kamera SBA von dem Sichtbereich BAB und eine Verarbeitung der Bilddaten BD durch die Verarbeitungseinheit 41a.

Anschließend erfolgt bei dem Schritt 10.II eine automatische Bestimmung der Positionen P_{M} und Orientierungen OR_{M} aller Markierungen M im Sichtbereich BAB.

Weiterhin erfolgt bei dem Schritt 11.IV nun ein automatisierter Vergleich aller Markierungen M (auch als Marker bezeichnet) mit entsprechenden Referenzinformationen der Referenzbilddaten RBD aus dem Datenspeicher 42. Es werden die bei dem Schritt 10.II erfassten ID-Daten ID_{M} mit den hinterlegten Werten bzw. den Referenz-ID-Daten ID_{R} abgeglichen und es erfolgt ggf. eine automatische Korrektur.

Bei dem Schritt 11.IV werden die Marker IDs der Markierungen M mit entsprechenden Referenzdaten, also den bekannten Daten der Marker IDs verglichen. Jeder Marker hat eine eindeutige ID (z.B. eine im Arcuo-Marker oder 2D Code codierte Nummer), die ihn von anderen Markern unterscheidet und wenn man feststellen möchte, ob sich die für dieses Sichtfeld erwarteten Marker im Bild befinden, dann leistet das der Schritt 11.IV, indem bei dem Schritt 11.IV diese IDs mit den bekannten ID-Daten verglichen werden.

Der Schritt 11.IV ist erforderlich, um bei dem Schritt 11.IVa festzustellen, ob sich alle Marker überhaupt im Sichtfeld bzw. Sichtbereich FoV der Kamera befinden. Falls dies nicht der Fall ist, ist der Schritt 11.VIII, der den Feinabgleich der Positionen vornimmt, noch gar nicht möglich, da einige oder alle Marker gar nicht zu sehen sind. Daher wird, falls die Kamera so sehr verstellt ist, dass ein oder mehrere Marker M nicht mehr sichtbar sind, versucht, das gesamte mit der Motorsteuerung erreichbare Sichtfeld abzurastern, bis endlich alle für diesen View erwarteten Marker zu sehen sind. Das leistet der Schritt 11.IV zusammen mit dem Test 11.IVa, indem er die im Bild sichtbaren IDs der Marker mit den erwarteten IDs vergleicht. Erst wenn alle erwarteten IDs zu finden sind, gilt der Test 11.IVa mit dem Ergebnis, dass alle erwarteten Marker sichtbar sind, als bestanden. Der Schritt 11.IV (Ermitteln der Marker IDs und Vergleich mit den erwarteten IDs) ist also eine Voraussetzung für den Test 11.IVa (alle Marker sichtbar). Wenn das gelungen ist und der Test 11.IVa dann bestanden ist, wird in der äußeren Schleife mit dem Schritt 11.VIII der Feinabgleich der Positionen P_{M} und Orientierungen OR_{M} der Marker M vorgenommen. Hier wird nun versucht, mit der Motorsteuerung die Kamera so auszurichten, dass die Positionen P_{M} und Orientierungen OR_{M} der Marker M mit den vorbestimmten Positionen P_{R} und Orientierungen OR_{R} wieder übereinstimmen. Dies wird so lange wiederholt, bis der Test bei dem Schritt 11.XII bestanden wird.

In einem manuellen Prozess würde der Operator zunächst prüfen, ob alle Marker M überhaupt zu sehen sind und eine stark verdrehte und verkippte Kamera zunächst grob so ausrichten, bis alle erwarteten Markierungen im Bild sichtbar sind. Erst danach wird es sinnvoll, die Feinjustierung vorzunehmen und die Marker mit den Sollpositionen zu vergleichen.

Dann wird bei dem Schritt 11.IVa automatisch überprüft, ob sich alle erwarteten Markierungen M im Sichtbereich FoV der Kamera befinden. Falls das nicht der Fall ist, was in FIG 11 mit "n" gekennzeichnet ist, wird bei dem Schritt 11.V ausgehend vom aktuellen Sichtbereich der gesamte mögliche Sichtbereich der Kamera mit einer passenden Schrittweite abgerastert, bis ein Sichtbereich gefunden wurde, in dem alle für diesen Sichtbereich erwarteten Markierungen M vom System detektiert werden können. D.h., bei dem Schritt 11.V wird zunächst ermittelt, ob bereits alle möglichen Sichtbereiche geprüft wurden. Ist das nicht der Fall, was in FIG 11 mit "n" gekennzeichnet ist, so wird zu dem Schritt 11.VI übergegangen und es werden Kamera-Steuersequenzen für eine Einstellung einer Kamera SBA für den nächsten Sichtbereich berechnet. Als nächstes wird die Kamera SBA bei dem Schritt 11.VII neu für den nächsten Sichtbereich justiert und es wird zu dem Schritt 10.I zurückgekehrt.

Wird bei dem Schritt 11.V ermittelt, dass alle möglichen Sichtbereiche geprüft wurden, was in FIG 11 mit "y" gekennzeichnet ist, so wird zu dem Schritt 11.Va übergegangen, der Prozess gestoppt und eine Meldung ausgegeben, dass manuelle Hilfe benötigt wird, weil nicht alle Markierungen M gefunden wurden.

Wird bei dem Schritt 11.IVa ermittelt, dass alle Markierungen M sichtbar sind, was in FIG 11 mit "y" gekennzeichnet ist, so wird zu dem Schritt 11.VIII übergegangen und es wird ein Vergleich der Positionen P_{M} und Orientierungen OR_{M} mit den entsprechenden gespeicherten Referenzwerten P_{R}, OR_{R} durchgeführt. Wird bei dem Schritt 11.IX auf Basis des Vergleichsergebnisses ermittelt, dass die Abweichung d anwächst oder stagniert, so wird zu dem Schritt 11.Va übergegangen und der Prozess gestoppt und eine Meldung ausgegeben, dass manuelle Hilfe benötigt wird, weil die automatische Justierung nicht funktioniert. Reduzieren sich die Abweichungen d, was in FIG 11 mit "n" gekennzeichnet ist, so wird zu dem Schritt 11.X übergegangen, bei dem erneut eine Kamera-Steuersequenz für eine Bewegung der Kamera SBA berechnet wird. Bei dem Schritt 11.XI erfolgt darauf eine erneute Justierung der Kamera SBA auf Basis der ermittelten Abweichungen d bzw. der ermittelten Kamera-Steuersequenz. Anschließend wird zu dem Schritt 10.I zurückgekehrt und es erfolgt ein erneuter Vergleich der Markierungen M mit entsprechenden Referenzmarkierungen RM.

Es werden also aus den oben beschriebenen Abweichungen zwischen Soll und Ist für die Positionen und Orientierungen durch die Verarbeitungseinheit 41a entsprechende Steuerbefehle für die Motorsteuerung der Kamera SBA errechnet und an diese übermittelt, um die Kamera SBA so zu bewegen, dass sich die Markierungen M im Sichtfeld den erwarteten Positionen P_{R} und Orientierungen OR_{R} annähern.

Der Prozess wird so lange wiederholt, wie sich die Differenzen d verkleinern und wird abgebrochen, wenn dies nicht mehr möglich ist, oder er wird bei dem Schritt 11.XIII erfolgreich beendet, wenn bei dem Schritt 11.XII ermittelt wurde, dass die Differenzen d unter den vorher definierten Toleranzen SW liegen. In diesem Fall werden die ermittelten Bildaufnahmeparameter ABBP in dem Datenspeicher abgespeichert.

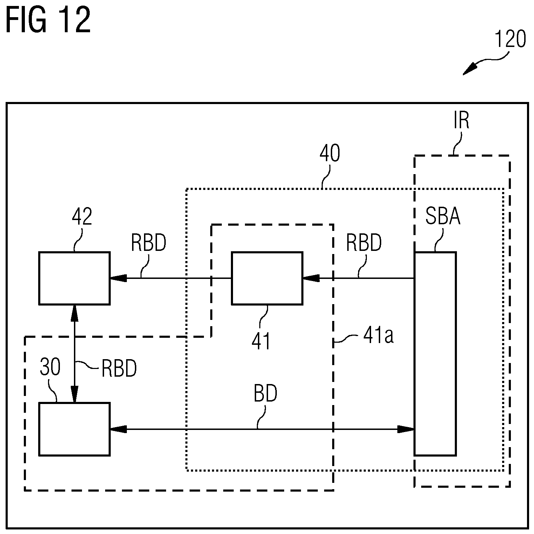

In FIG 12 ist eine schematische Darstellung eines Schienenfahrzeugs 120 mit einer Re-Justageeinrichtung gemäß einem Ausführungsbeispiel der Erfindung veranschaulicht.

Das Schienenfahrzeug 120 umfasst eine Re-Justageeinrichtung 30 und eine Anordnung 40 zur Generierung von Referenzbilddaten RBD mit einer Bildaufnahmeeinheit SBA in einem Innenraum IR, einem Bildaufnahmebereich in dem Innenraum IR und mit einer Justageeinheit 41. Die Re-Justageeinrichtung 30 und die Justageeinheit 41 können auch zu der in FIG 5 veranschaulichten Verarbeitungseinheit 41a zusammengefasst werden. Weiterhin umfasst das Schienenfahrzeug 120 einen Datenspeicher 42, welcher die Referenzbilddaten RBD speichert. Die Referenzbilddaten RBD werden in einem Abgleich mit den von der Bildaufnahmeeinheit SBA erzeugten aktuellen Bilddaten BD dazu genutzt, um eine Re-Justierung vorzunehmen, wie sie im Zusammenhang mit FIG 6 bis FIG 11 ausführlich beschrieben wurde.

Es wird abschließend noch einmal darauf hingewiesen, dass es sich bei den vorbeschriebenen Verfahren und Vorrichtungen lediglich um bevorzugte Ausführungsbeispiele der Erfindung handelt und dass die Erfindung vom Fachmann variiert werden kann, ohne den Bereich der Erfindung zu verlassen, soweit er durch die Ansprüche vorgegeben ist. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können. Ebenso schließt der Begriff "Einheit" nicht aus, dass diese aus mehreren Komponenten besteht, die gegebenenfalls auch räumlich verteilt sein können.

Unabhängig vom grammatikalischen Geschlecht eines bestimmten Begriffes sind Personen mit männlicher, weiblicher oder anderer Geschlechteridentität mit umfasst.

## Patentansprüche

1. Verfahren zur automatischen Überprüfung und zur Re-Justierung einer statischen Bildaufnahmeeinheit (SBA), aufweisend die Schritte:
- Erfassen von Bilddaten (BD) von einem Bildaufnahmebereich (BAB) mit der statischen Bildaufnahmeeinheit (SBA) mit aktuellen Bildaufnahmeparametern (ABBP) der statischen Bildaufnahmeeinheit (SBA),
- Ermitteln von Posendaten (P_{M}, OR_{M}) von Markierungen (M) in den erfassten Bilddaten (BD),
- Vergleichen der Posendaten (P_{M}, OR_{M}) der Markierungen (M) der erfassten Bilddaten (BD) mit Posendaten (P_{R}, OR_{R}) von Referenzmarkierungen (RM) von Referenzbilddaten (RBD), welche von dem Bildaufnahmebereich (BAB) mit vorbestimmten Bildaufnahmeparametern (VBAP) der statischen Bildaufnahmeeinheit (SBA) erfasst wurden,
- Anpassen der aktuellen Bildaufnahmeparameter (ABBP) auf Basis des Vergleichs.

2. Verfahren nach Anspruchs 1, wobei das Anpassen der aktuellen Bildaufnahmeparameter (ABBP) auf Basis des Vergleichs eine iterative Vorgehensweise mit einem erneuten Erfassen von Bilddaten (BD) von dem Bildaufnahmebereich (BAB) mit der statischen Bildaufnahmeeinheit (SBA) mit den angepassten aktuellen Bildaufnahmeparametern (ABBP) und gegebenenfalls einer weiteren Anpassung der aktuellen Bildaufnahmeparametern (ABBP), bis die Markierungen (M) in den erneut erfassten Bilddaten (BD) mit den Markierungen (RM) in den Referenzbilddaten (RBD) bezüglich ihrer Posendaten (P_{M}, P_{R}, OR_{M}, OR_{R}) vollständig übereinstimmen.

3. Verfahren nach Anspruch 1 oder 2, wobei die Posendaten einen der folgenden Datentypen umfassen:
- Positionsdaten (P_{R}) der Markierungen (M),
- Orientierungsdaten (OR_{R}) der Markierungen (M).

4. Verfahren nach einem der vorstehenden Ansprüche, wobei die Markierungen (M) derart ausgebildet sind, dass sie voneinander individuell eindeutig unterscheidbar sind und/oder die die Markierungen (M) durch Anwendung von Computer-Vision-Methoden automatisiert lokalisiert und identifiziert werden.

5. Verfahren nach einem der vorstehenden Ansprüche, wobei die Bildaufnahmeparameter (VBAP, ABBP) intrinsische und/oder extrinsische Kameraparameter aufweisen.

6. Verfahren nach einem der vorstehenden Ansprüche, wobei das Anpassen der aktuellen Bildaufnahmeparameter (ABBP) automatisiert erfolgt.

7. Verfahren nach einem der vorstehenden Ansprüche, wobei bei dem Schritt des Anpassens der aktuellen Bildaufnahmeparameter (ABBP) eine Überlagerung der Referenzbilddaten (RBD) mit den erneut erfassten Bilddaten (BD) erfolgt.

8. Verfahren nach einem der vorstehenden Ansprüche, wobei bei dem Schritt des Anpassens der aktuellen Bildaufnahmeparameter (ABBP) durch eine automatisierte Erkennung der Markierungen (M) eine manuelle Anpassung der aktuellen Bildaufnahmeparameter (ABBP) automatisiert überprüft wird.

9. Verfahren nach Anspruch 8, wobei der Schritt des Anpassens der aktuellen Bildaufnahmeparameter (ABBP) eine iterative Vorgehensweise mit einer abwechselnd manuellen Anpassung der aktuellen Bildaufnahmeparameter (ABBP) und einer anschließenden automatisierten Prüfung der Güte der Anpassung durch eine automatisierte Erkennung der Markierungen (M) und einen automatisierten Vergleich mit Referenzpositionen (P_{R}) der Markierungen (M) umfasst.

10. Verfahren zum Generieren von Referenzbilddaten (RBD) zur automatischen Überprüfung und zur Re-Justierung einer statischen Bildaufnahmeeinheit (SBA) zur Anwendung der Referenzbilddaten (RBD) in einem Verfahren nach einem der Ansprüche 1 bis 9, aufweisend die Schritte:
- Anordnen von Markierungen in einem Bildaufnahmebereich (BAB) der statischen Bildaufnahmeeinheit (SBA),
- Justieren der statischen Bildaufnahmeeinheit (SBA) mit vorbestimmten Bildaufnahmeparametern (VBAP),
- Erfassen der Referenzbilddaten (RBD) mit der statischen Bildaufnahmeeinheit (SBA) von dem Bildaufnahmebereich (BAB) mit den justierten vorbestimmten Bildaufnahmeparametern (VBAP).

11. Re-Justageeinrichtung (30), aufweisend:
- eine Eingangsschnittstelle (31) zum Erfassen von Bilddaten (BD) von einem Bildaufnahmebereich (BAB), welche mit einer statischen Bildaufnahmeeinheit (SBA) mit aktuellen Bildaufnahmeparametern (ABBP) erfasst wurden,
- eine Lokalisierungseinheit (32) zum Ermitteln von Posendaten (P_{M}, OR_{M}) von Markierungen (M) in den erneut erfassten Bilddaten (BD),
- eine Vergleichseinheit (33) zum Vergleichen der Posendaten (P_{M}, OR_{M}) der Markierungen (M) der erfassten Bilddaten (BD) mit Posendaten (P_{R}, OR_{R}) von Referenzmarkierungen (RM) von Referenzbilddaten (RBD), welche von dem Bildaufnahmebereich (BAB) mit vorbestimmten Bildaufnahmeparametern (VBAP) der statischen Bildaufnahmeeinheit (SBA) erfasst wurden,
- eine Re-Justageeinheit (34) zum Anpassen der aktuellen Bildaufnahmeparameter (ABBP) der statischen Bildaufnahmeeinheit (SBA) auf Basis des Vergleichs.

12. Anordnung (40) zur Generierung von Referenzbilddaten (RBD), aufweisend:
- einen Bildaufnahmebereich (BAB) mit angeordneten Markierungen (RM) für eine Justage einer statischen Bildaufnahmeeinheit (SBA),
- eine Justageeinheit (41) zum Justieren der statischen Bildaufnahmeeinheit (SBA) mit vorbestimmten Bildaufnahmeparametern (VBAP),
- die statische Bildaufnahmeeinheit (SBA) zum Erfassen der Referenzbilddaten (RBD) von dem Bildaufnahmebereich (BAB) mit justierten vorbestimmten Bildaufnahmeparametern (VBAP).

13. Fahrzeug (120), vorzugsweise Schienenfahrzeug, aufweisend
- eine statische Bildaufnahmeeinheit (SBA) zur Aufnahme eines Innenbereichs des Fahrzeugs,
- eine Re-Justageeinrichtung (30) nach Anspruch 11,
- eine Anordnung (40) zur Generierung von Referenzbilddaten (RBD) nach Anspruch 12.

14. Computerprogrammprodukt, umfassend Befehle, die bei der Ausführung des Programms durch einen Computer diesen veranlassen, die Schritte des Verfahrens nach einem der Ansprüche 1 bis 10 zur Durchführung einer Justierung auszuführen.

15. Computerlesbares Speichermedium, umfassend Befehle, die bei der Ausführung durch einen Computer diesen veranlassen, die Schritte des Verfahrens nach Anspruch 1 bis 10 zur Durchführung einer Justierung auszuführen.
